(19) **Europäisches Patentamt**
**European Patent Office**
**Office européen des brevets**

(11) **EP 2 035 822 B1**

(12) **FASCICULE DE BREVET EUROPEEN**

(45) Date de publication et mention
de la délivrance du brevet:
**07.12.2011 Bulletin 2011/49**

(51) Int Cl.:
*G01N 29/06* (2006.01)     *G01N 29/04* (2006.01)
*G01N 29/22* (2006.01)     *G01N 29/26* (2006.01)
*G01N 29/265* (2006.01)     *G01N 29/44* (2006.01)

(21) Numéro de dépôt: **07788926.9**

(22) Date de dépôt: **25.06.2007**

(86) Numéro de dépôt international:
**PCT/FR2007/001048**

(87) Numéro de publication internationale:
**WO 2008/000940 (03.01.2008 Gazette 2008/01)**

(54) **CONTROLE NON DESTRUCTIF DE PRODUITS SIDERURGIQUES PAR ULTRASONS**

ZERSTÖRUNGSFREIES TESTEN VON GIESSEREIPRODUKTEN MITTELS ULTRASCHALL

NON-DESTRUCTIVE TESTING BY ULTRASOUND OF FOUNDRY PRODUCTS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **30.06.2006 FR 0605923**

(43) Date de publication de la demande:
**18.03.2009 Bulletin 2009/12**

(73) Titulaire: **V & M FRANCE**
**92100 Boulogne-Billancourt (FR)**

(72) Inventeurs:
• **BISIAUX, Bernard**
**F-59300 Valenciennes (FR)**
• **LESAGE, Frédéric**
**F-59300 Valenciennes (FR)**
• **PETIT, Sébastien**
**F-59239 Thumeries (FR)**
• **DEUTSCH, Sylvain**
**F-21140 Semur en Auxois (FR)**

(74) Mandataire: **de Kernier, Gabriel**
**Cabinet Netter**
**Conseils en Propriété Industrielle**
**36, avenue Hoche**
**75008 Paris (FR)**

(56) Documents cités:
**WO-A-95/03526     FR-A1- 2 796 153**

• **RAVANBOD ET AL: "Application of neuro-fuzzy techniques in oil pipeline ultrasonic nondestructive testing" NDT & E INTERNATIONAL, BUTTERWORTH-HEINEMANN, OXFORD,, GB, vol. 38, no. 8, décembre 2005 (2005-12), pages 643-653, XP005058825 ISSN: 0963-8695 cité dans la demande**
• **DUNLOP I ET AL: "Shape classification of flaw indications in three-dimensional ultrasonic images" IEE PROCEEDINGS: SCIENCE, MEASUREMENT AND TECHNOLOGY, IEE, STEVENAGE, HERTS, GB, vol. 142, no. 4, 1 juillet 1995 (1995-07-01), pages 307-12, XP006004423 ISSN: 1350-2344 cité dans la demande**
• **MARGRAVE F W ET AL: "The use of neural networks in ultrasonic flaw detection" MEASUREMENT, INSTITUTE OF MEASUREMENT AND CONTROL. LONDON, GB, vol. 25, no. 2, mars 1999 (1999-03), pages 143-154, XP004158745 ISSN: 0263-2241**

## Description

L'invention concerne le contrôle non destructif de matériaux, notamment pour des tubes en fabrication.

On connaît déjà différentes propositions, sur lesquelles on reviendra, tendant à utiliser les réseaux neuronaux dans le cadre du contrôle non destructif de matériaux. Mais cet existant n'est pas de nature à fonctionner en milieu industriel, sur des équipements déjà en service, en temps réel, et tout en permettant une classification au vol des imperfections selon leur nature, de sorte que l'on puisse remédier rapidement à un problème survenu en phase de production.

L'objet de l'invention est d'améliorer la situation vers un système qui puisse :

- être utilisé en milieu industriel et implanté facilement sur des équipements déjà existants dans ce milieu,
- être utilisé en temps réel, c'est-à-dire donner un diagnostic rapide (à une vitesse suffisante pour ne pas ralentir la vitesse de production globale), et
- qui permette une classification des imperfections selon leur nature de manière à connaître leur gravité et à permettre la détermination de la cause technique à l'origine de l'imperfection et ainsi remédier rapidement au problème en phase de production.

Selon un premier aspect de l'invention, il est proposé un dispositif qui forme outil d'aide à l'exploitation, pour le contrôle non destructif de tubes (ou autres produits sidérurgiques) en cours et en sortie de fabrication. Un tel outil est destiné à tirer des informations sur d'éventuelles imperfections du tube. Des capteurs ultrasonores émetteurs sont excités sélectivement selon une loi de temps choisie. Des signaux de retour sont captés par des capteurs ultrasonores récepteurs formant un agencement de géométrie choisie, monté en couplage ultrasonore avec le tube par l'intermédiaire d'un milieu liquide. Enfin, il y a généralement un mouvement relatif de rotation/translation entre le tube et l'agencement de transducteurs.

L'outil d'aide à l'exploitation proposé comprend :

- un convertisseur, capable d'isoler sélectivement une représentation numérique de possibles échos dans des fenêtres temporelles désignées, en fonction du mouvement relatif de rotation/translation, et d'en tirer une image d'imperfections possibles dans le tube,
- un filtre, capable de déterminer, dans les images, des zones d'imperfection présumée, ainsi que des propriétés de chaque imperfection présumée,
- un combinateur, agencé pour préparer des entrées numériques de circuit neuronal, à partir d'un extrait des images correspondant à une zone d'imperfection présumée, de propriétés de l'imperfection présumée dans la même zone, issues du filtre, et de données de contexte,
- au moins un circuit neuronal, qui reçoit des entrées issues du combinateur,
- un étage numérique de décision et alarme, opérant sur la base de la sortie du circuit neuronal, et
- un automate de tri et de marquage, agencé pour écarter et marquer des tubes décidés non conformes par l'étage numérique de décision et alarme.

L'invention peut aussi se placer au niveau d'un dispositif de contrôle non destructif de tubes (ou autres produits sidérurgiques) en cours ou en sortie de fabrication, qui comprend :

- un agencement de transducteurs ultrasonores de géométrie choisie, monté en couplage ultrasonore avec le tube par l'intermédiaire d'un milieu liquide, avec mouvement relatif de rotation/translation entre le tube et l'agencement de transducteurs,
- des circuits pour exciter sélectivement ces éléments transducteurs selon une loi de temps choisie, et pour recueillir les signaux de retour qu'ils captent, et
- un outil d'aide à l'exploitation tel que défini plus haut, et détaillé ci-après.

Un autre aspect de l'invention s'exprime sous forme de procédé de contrôle non destructif de tubes (ou autres produits sidérurgiques) en cours ou en sortie de fabrication, comprenant les étapes suivantes :

a. prévoir un agencement de transducteurs ultrasonores de géométrie choisie, monté en couplage ultrasonore avec le tube par l'intermédiaire d'un milieu liquide, avec mouvement relatif de rotation/translation entre le tube et l'agencement de transducteurs,

b. exciter sélectivement ces éléments transducteurs selon une loi de temps choisie,

c. recueillir les signaux de retour qu'ils captent, afin d'analyser sélectivement ces signaux de retour, pour en tirer des informations sur d'éventuelles imperfections du tube.

Le procédé proposé comprend en outre les étapes suivantes :

d. isoler sélectivement une représentation numérique de possibles échos dans des fenêtres temporelles désignées, en fonction du mouvement relatif de rotation/translation, et en tirer une image d'imperfections possibles dans le tube,

e. filtrer les images selon des critères de filtrage choisis, afin d'y déterminer des zones d'imperfection présumée, ainsi que des propriétés de chaque imperfection présumée,

f. former des entrées numériques de circuit neuronal, à partir d'un extrait des images correspondant à une zone d'imperfection présumée, de propriétés de l'imperfection présumée dans la même zone, issues du filtre, et de données de contexte,

g. appliquer les entrées ainsi formées à au moins un circuit neuronal,

h. traiter numériquement la sortie du circuit neuronal selon des critères de décision choisis, pour en tirer une décision et/ou une alarme, et

i. écarter et marquer des tubes décidés non conformes par l'étape h.

D'autres aspects de l'invention seront trouvés dans la suite de la présente demande de brevet.
D'autres caractéristiques et avantages de l'invention apparaîtront à l'examen de la description détaillée ci-après, ainsi que des dessins annexés sur lesquels :

- la figure 1 est une vue schématique en perspective d'un tube, ayant des imperfections ou défauts dits étalons;
- la figure 2 est une vue latérale schématique illustrant un exemple d'installation du type "contrôle à tête tournante" sur un tube en sortie de fabrication ;
- les figures 3A à 3C sont des détails de différents types de mesure d'épaisseur et de contrôle d'imperfections longitudinales et transverses ;
- la figure 4 est le schéma de principe de l'électronique associée à un capteur ultrasonore en contrôle non destructif dans une installation classique ;
- les figures 5A et 5B sont une vue en bout et une vue latérale d'un type particulier de cellule de contrôle non destructif, communément appelé "à tête tournante" et représenté schématiquement ;
- la figure 6 montre la complexité des trajets ultrasonores rencontrés dans un tube, sur un exemple simple ;
- les figures 6A et 6B sont des diagrammes temporels schématiques de signaux ultrasonores, pour un capteur sous incidence oblique, et pour un capteur sous incidence nomale (perpendiculaire), respectivement ;
- la figure 7 est un graphe montrant une représentation classique de la sélectivité d'une installation de contrôle ;
- la figure 8 est un schéma de principe de l'électronique associée à un capteur ultrasonore en contrôle non destructif dans un exemple d'installation susceptible de mettre en oeuvre l'invention ;
- la figure 8A est le schéma fonctionnel plus détaillé d'une partie de la figure 8;
- la figure 9 est une copie d'écran schématisée illustrant deux images ultrasonores numérisées d'imperfections potentielles dans un tube ;
- les figures 10A à 10D sont des représentations schématiques de différents types d'imperfections selon la classification API (American Petroleum Institute) et qui constituent les données de sortie du réseau neuronal tendant à déterminer le type de l'imperfection ;
- la figure 11 est le schéma fonctionnel plus détaillé d'une autre partie de la figure 8;
- la figure 12 est un diagramme séquentiel illustrant le traitement d'imperfections potentielles successives dans une image ;
- la figure 13 est le schéma fonctionnel d'un système de filtres utilisables selon l'invention ;
- la figure 14 est le schéma fonctionnel d'un montage à réseau neuronal tendant à déterminer le type d'une imperfection dans un tube ;
- la figure 15 est le schéma fonctionnel d'un montage à réseau neuronal tendant à déterminer le degré de profondeur d'une imperfection dans un tube ;
- la figure 16 est le schéma fonctionnel du modèle de neurone ;
- la figure 17 est un exemple de fonction de transfert d'un neurone élémentaire ; et
- la figure 18 est le schéma général d'une installation utilisant l'invention pour la détection des défauts sur différents types de capteurs.

Les dessins contiennent des éléments de caractère certain. Ils pourront donc non seulement servir à mieux faire comprendre la présente invention, mais aussi contribuer à sa définition, le cas échéant.

Dans la suite du présent texte, un capteur ultrasonore pourra être désigné indifféremment par les termes capteur, ou palpeur ou transducteur, bien connus de l'homme du métier.

Usages connus des réseaux neuronaux

L'utilisation de réseaux neuronaux dans le cadre du contrôle non destructif de matériaux a fait l'objet de nombreuses publications, la plupart du temps assez théoriques, que l'on considérera maintenant.

L'article "Localization and Shape Classification of Defects using the Finite Element Method and the Neural Networks" de ZAOUI, MARCHAND et RAZEK (NDT.NET-AOUT 1999, vol. IV n° abrégé 8) formule des propositions dans ce domaine. Cependant, ces propositions sont faites dans le cadre de manipulations en laboratoire, et l'application décrite ne permet pas une mise en oeuvre en ligne, en milieu industriel. En outre, seule la détection par courants de Foucault est traitée, ce qui est souvent insuffisant.

L'article "Automatic Detection of Defect in Industrial ultrasound images using a neural Network" de Lawson et Parker (Proc. of Int. Symposium on Lasers, Optics, and Vision for Productivity in Manufacturing I (Vision Systems: Applications), June 1996, Proc. of SPIE vol. 2786, pp. 37-47, 1996), décrit l'application du traitement d'images et des réseaux neuronaux à l'interprétation de ce que l'on appelle "scan TOFD". La méthode dite TOFD (Time of Flight Diffraction) consiste à repérer les positions du capteur ultrasonore où l'on peut observer une diffraction du faisceau sur les bords de l'imperfection, ce qui permet par la suite de dimensionner l'imperfection. Cette méthode est difficilement adaptable aux équipements de contrôle non destructif déjà existants, en particulier en milieu industriel.

L'article "Shape Classification of Flaw Indications in 3-Dimensional ultrasonic Images" de Dunlop et McNab (IEE Proceedings - Science, Measurement and Technology - July 1995 -- Volume 142, Issue 4, p. 307-312) concerne le diagnostic en termes de corrosion de pipeline. Le système permet un contrôle non destructif en profondeur et permet une étude dans les trois dimensions et en temps réel. Cependant, le système est très lent. Cela rend son utilisation en milieu industriel relativement difficile.

L'article "Application of neuro-fuzzy techniques in oil pipelines ultrasonic nondestructive testing" de Ravanbod (NDT&E International 38 (2005) p 643-653) suggère que les algorithmes de détection de l'imperfection peuvent être améliorés par l'utilisation d'éléments de logique floue, mêlés au réseau de neurones. Cependant, les techniques étudiées concernent là aussi l'inspection d'imperfections de pipeline et un diagnostic sur des imperfections de corrosion.

DE 42 01 502 C2 décrit une méthode pour créer un signal destiné à un réseau de neurones, mais n'apporte que peu ou pas d'enseignements sur l'interprétation des résultats, en termes de diagnostic. En outre, une nouvelle fois, seule la détection par courants de Foucault est traitée.

La publication de brevet japonais 11-002626 concerne la détection d'imperfections longitudinales uniquement, et seulement par courants de Foucault.

La publication de brevet No. 08-110323 se contente d'une étude en fréquence des signaux obtenus par ultrasons.

La publication de brevet No. 2003-279550 décrit un programme pour faire la différence entre une zone qualifiée de saine et une zone mauvaise d'un produit en utilisant un réseau de neurones. Ce programme ne va pas plus loin, et ne permet pas la classification ni la localisation d'imperfections. En conséquence, l'application de ce programme peut fréquemment conduire au rejet de pièces qui seraient pourtant considérées comme bonnes si les résultats étaient interprétés par un opérateur humain.

Contrôle non destructif de tubes - Etat de la technique

La description détaillée ci-après est donnée essentiellement dans le cadre du contrôle non destructif de tubes en sortie de fabrication, à titre non limitatif.

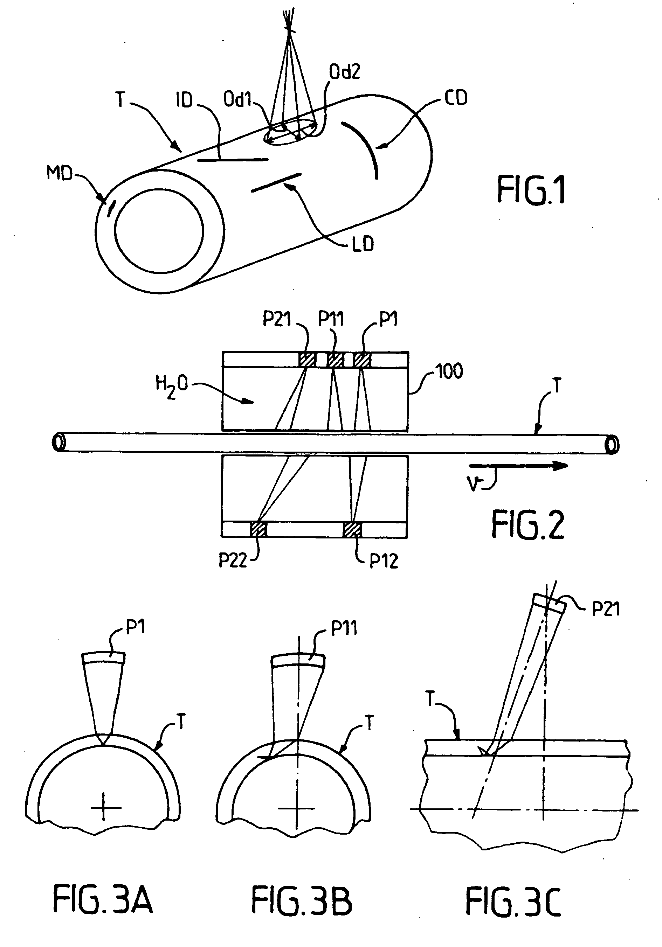

Comme indiqué sur la figure 1, les imperfections dans un tube T peuvent être distinguées d'après leur position. Ainsi, les imperfections de surface, interne ou externe, comprennent les imperfections longitudinales LD, et les imperfections circonférentielles (ou transverses ou travers ou transversales) CD et les imperfections obliques ou inclinées ID ; par différents agencements de capteurs, on cherche à les détecter dès qu'elles s'étendent sur une longueur et une profondeur définies selon les normes ou les spécifications ou cahiers de charges des clients (à titre d'exemple une valeur de longueur d'imperfection citée dans les normes est de 1/2 pouce, soit 12,7 mm environ avec une profondeur d'environ 5 % de l'épaisseur du produit contrôlé). On s'intéresse aussi aux imperfections « dans la paroi », c'est-à-dire dans la masse MD (non visibles sur la figure 1), qui correspondent souvent à des inclusions ou des dédoublures, que l'on cherche à détecter en même temps que l'on fait une mesure d'épaisseur. Les faisceaux ultrasonores sont représentés divergents sur la figure 1 pour faire comprendre la détection d'imperfections. En pratique, ils seront plutôt convergents, comme on le verra.

De manière classique, en contrôle non destructif par ultrasons, on utilise l'un des trois types d'installations suivants : les installations dites "à tête tournante", les installations dites "à tube tournant", et les installations à capteur encerclant multi-éléments, toutes bien connues de l'homme du métier. Dans le cas d'utilisation de capteurs opérant en balayage électronique, la rotation relative tube/capteurs est virtuelle. Telle qu'utilisée ici, l'expression "mouvement relatif de rotation/translation entre le tube et l'agencement de transducteurs" couvre le cas où la rotation relative est virtuelle.

Sur la figure 2, la machine de contrôle non destructif à tête tournante comprend un dispositif à ultrasons proprement dit, monté sur une enceinte à eau ou "boîte à eau" 100, que traverse le tube T à la vitesse v = 0,5 mètre par seconde, par exemple. Les capteurs ou palpeurs à ultrasons émettent des ondes longitudinales dans l'eau. Un capteur donné travaille par exemple à 1 ou quelques MHz. Il est excité répétitivement par impulsions, de forme d'onde choisie, à une cadence (ou fréquence) de récurrence Fr qui est de l'ordre de quelques kHz ou dizaines de kHz, par exemple de 10 kHz.

Par ailleurs, un transducteur à ultrasons possède :

- un rayonnement de champ proche, pratiquement parallèle, dans une zone dite de Fresnel, siège de nombreuses interférences, dont la longueur dans l'axe du faisceau est

$$N = 0,25\, D^2 / \lambda$$

où D est le diamètre de la pastille active du transducteur, et $\lambda$ sa longueur d'onde de travail, et
- un rayonnement de champ lointain, dans une zone dite de Fraunhofer, selon un faisceau divergent d'angle $2\alpha$, avec

$$\sin \alpha = 1,22\, \lambda / D$$

Les figures 3A, 3B, 3C représentent des capteurs rendus convergents au moyen d'une lentille (à ultrasons) concave, tels qu'ils sont couramment utilisés dans les applications aux tubes. On utilise de préférence la zone de Fraunhofer, moins perturbée.

Ainsi, pour des capteurs tels que P11 et P12, le faisceau d'ultrasons, qui est en général focalisé, s'étend au voisinage d'un plan perpendiculaire à l'axe du tube T. La détection se fait donc sensiblement en section droite. Leurs rôles sont les suivants:

- ou bien leur faisceau est également perpendiculaire à l'axe du tube T dans la section droite, et ils servent à la mesure d'épaisseur (par exemple P1, figure 3A); on parle alors de "palpage droit";
- ou bien leur faisceau est incident sur l'axe du tube T, en section droite, et ils servent à détecter les imperfections longitudinales (par exemple P11, figure 3B). Dans ce cas, l'angle d'incidence dans la section droite est de préférence choisi pour n'engendrer dans le tube que des ondes ultrasonores transversales ou de cisaillement, compte tenu des caractéristiques de l'interface eau/métal du tube (en principe eau/acier). On prévoit généralement deux capteurs P11 et P12, d'incidences opposées par rapport à l'axe du tube (figure 2).

La machine comprend aussi des capteurs tels que P21 et P22 dont, par contre, le faisceau d'ultrasons, qui est également focalisé en règle générale, s'étend au voisinage d'un plan passant par l'axe du tube, mais incident par rapport au plan perpendiculaire à l'axe du tube T (voir capteur P21, Figure 3C). Dans ce cas, l'angle d'incidence par rapport au plan perpendiculaire à l'axe du tube est de préférence choisi pour n'engendrer dans le tube que des ondes ultrasonores transversales ou de cisaillement, compte tenu des caractéristiques de l'interface eau/métal du tube (en principe eau/acier). Ces capteurs servent à détecter les imperfections transverses. On prévoit généralement deux capteurs P21 et P22, d'incidences opposées par rapport au plan perpendiculaire à l'axe du tube (figure 2).

Le contrôle des imperfections se fait généralement en focalisant le faisceau. Le point de focalisation se mesure par rapport au "bond", qui correspond au premier trajet aller-retour des ultrasons dans l'épaisseur du tube. Ainsi, le capteur de la figure 3A est focalisé au demi-bond, tandis que les capteurs des figures 3B et 3C sont focalisés à trois-quarts de bond. Par ailleurs, le contrôle des imperfections externes se fait généralement au bond, et celui des imperfections internes au demi-bond.

On note Ta le temps de présence requis pour que le palpeur puisse recevoir correctement le retour du faisceau d'ultrasons, représentatif d'une éventuelle imperfection. Ce temps Ta dépend de la somme des deux temps suivants:

- d'une part le temps de propagation aller-retour d'ondes ultrasonores longitudinales, sur la hauteur de la "colonne d'eau" présente entre le palpeur et le tube, sur le trajet des ultrasons,
- d'autre part le temps de propagation d'ondes ultrasonores transversales, tel qu'il est requis à l'intérieur du tube pour faire le contrôle non destructif lui-même. Ce temps dépend principalement d'un choix du nombre souhaité de réflexions des ondes transversales à l'intérieur de la paroi du tube.

Classiquement, les palpeurs sont entraînés en rotation autour de l'axe du tube, par des moyens non représentés, à une vitesse T de l'ordre de plusieurs milliers de tours par minute, (6000 rpm par exemple). Dans le cas également connu de l'homme du métier où c'est le tube qui est entraîné en rotation alors que les palpeurs ne sont pas entraînés en rotation (installation dite "à tube tournant") la vitesse de rotation du tube est de l'ordre de quelques dizaines à quelques milliers de tours par minute.

On peut appeler "cellule" chaque ensemble capteur - milieu de transmission (eau) - tube. Pour une cellule, on doit considérer en outre l'ouverture de faisceau Od des palpeurs à ultrasons en détection. Une ouverture peut être définie avec deux composantes (figure 1), l'une Od1 dans la section droite du tube, l'autre Od2 dans le plan passant par l'axe du tube et le palpeur.

Le réglage de l'installation (en fonction de la vitesse de rotation, de la vitesse de défilement, des dimensions Od1 et Od2 et du nombre de palpeurs) doit garantir un balayage par les faisceaux ultrasonores de l'ensemble des surfaces et du volume du tube à contrôler.

Il est à noter que certaines normes ou cahiers des charges ou spécifications des clients imposent un recouvrement des zones balayées.

Le temps d'analyse Ta est donc défini par un compromis entre:

- la cadence (ou fréquence) de récurrence Fr,
- en section droite du tube, la vitesse de rotation $\omega$, compte tenu de l'ouverture en détection Od1 des palpeurs à ultrasons (autrement dit, compte tenu de la rotation des capteurs, la composante Od1 de l'ouverture de faisceau doit permettre un temps de présence de l'imperfection en face des capteurs qui soit au moins égal à Ta ),
- le long du tube, la vitesse de défilement v de celui-ci, compte tenu de l'ouverture en détection Od2 d'un palpeur à ultrasons, et du nombre NFi de palpeurs consacrés à la même fonction Fi (qui constituent donc un groupe de palpeurs), sur la périphérie du tube (autrement dit, compte tenu de l'avance du tube, la composante Od2 de l'ouverture de faisceau doit permettre un temps de présence de l'imperfection en face du capteur (ou du groupe de capteurs) qui soit au moins égal à Ta).
- le nombre de palpeurs dédiés au même rôle (c'est à dire à la même fonction), et
- les temps de propagation des ondes tels définis précédemment.

Classiquement, la machine comprend typiquement en tout deux capteurs tels que P11, P12 pour le contrôle des imperfections de type LD, et éventuellement ID, deux capteurs tels que P21, P22 pour le contrôle des imperfections de type CD, auxquels s'ajoute en principe un capteur tel que P1, pour la mesure de l'épaisseur du produit et le contrôle des imperfections de type MD. Chaque capteur peut être en fait un groupe de capteurs travaillant ensemble, comme on le verra.

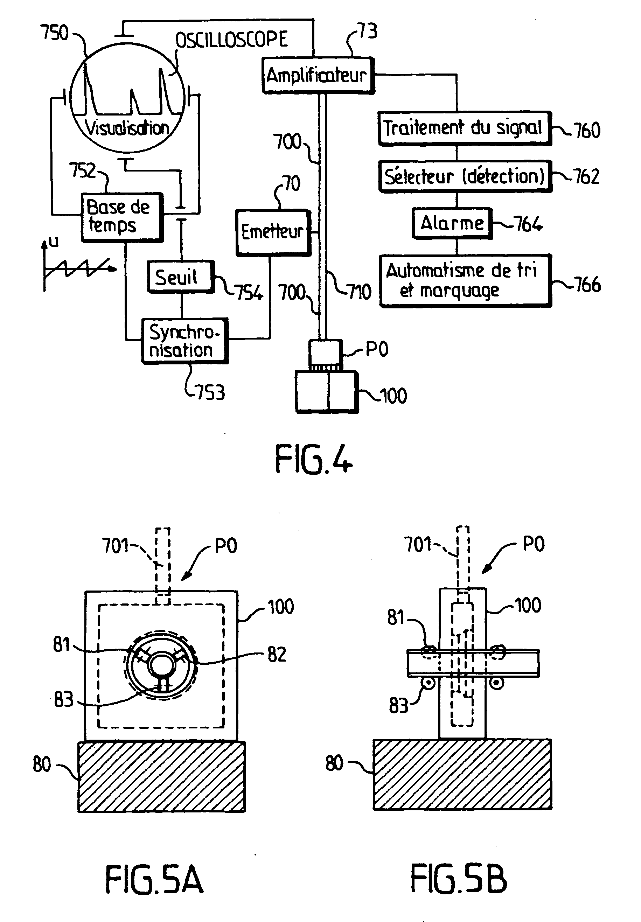

La machine possède, de façon intégrée ou à part, une électronique d'excitation et de détection associée à chacun des capteurs. Elle comprend (figure 4) un émetteur 70 d'impulsions, par exemple à 250 Volts pour l'excitation du palpeur P0 monté sur la boîte à eau 100. Comme partie intégrante du système de contrôle non destructif, le palpeur à ultrasons P0, ici émetteur/récepteur, reçoit les échos consécutifs à cette excitation. Les lignes 700 et 710 transmettent respectivement l'impulsion d'excitation et le signal aux bornes du palpeur à un amplificateur 73.

La sortie de l'amplificateur 73 sert à la visualisation pour l'opérateur et/ou au pilotage d'un automate de tri, capable d'écarter (en aval) les tubes non conformes.

La visualisation est par exemple réalisée par un oscilloscope 750, qui reçoit comme signal la sortie de l'amplificateur 73, et comme base de temps 752 un signal d'un étage de synchronisation 753 en provenance de l'émetteur 70. Un étage de seuil 754 évite l'aveuglement de l'oscilloscope au moment de l'impulsion d'émission.

Une autre sortie de l'amplificateur 73 va vers un étage de traitement de signal 760. Ce traitement comprend généralement un redressement, un lissage et un filtrage. Il est suivi d'un étage de détection ou sélecteur 762, capable d'isoler les échos significatifs, de manière connue. En détection de l'imperfection, c'est la présence d'un écho, avec son amplitude ou sa durée (donc son énergie), qui sont significatifs, dans certains créneaux temporels, essentiellement le demi-bond et le bond. Pour la détection en épaisseur, on vérifie que l'équivalent-distance de l'écart temporel entre les échos de fond respectifs correspond bien à l'épaisseur voulue du tube. Les anomalies détectées selon ces critères peuvent servir à émettre une alarme en 764, et/ou à piloter un automate 766 de tri qui évacue les tubes non conformes, en les marquant selon la ou les anomalies détectées.

Matériellement dans le cas d'une installation à tête tournante (figures 5A et 5B), la cellule comprend encore, sur un support mécanique 80, la boîte à eau 100, qui loge un ensemble capteur P0, avec une connexion 701, qui réunit les lignes 700 et 710 de la figure 4. On prévoit par exemple trois roulements 81 à 83 pour centrer le tube T.

Selon la technique connue (machine vendue par exemple par la société allemande GE NUTRONIK anciennement NUKEM), l'ensemble capteur P0 comprend des capteurs qui tournent à quelques milliers de tours/minute autour du tube. On peut également utiliser une pluralité de capteurs répartis en anneau autour du tube. L'anneau comprend par exemple 6 secteurs de 128 capteurs ultrasonores, répartis autour de la périphérie. Les secteurs de capteurs sont alternativement légèrement décalés dans le sens de l'axe du tube. Ceci permet d'avoir un recouvrement entre deux secteurs de capteurs consécutifs longitudinalement, et réduit également les problèmes d'interférences. L'interférence intervient lorsqu'un capteur donné reçoit des échos dus à un tir effectué sur un autre capteur.

A cela s'ajoute un banc (non représenté) de guidage du tube en amont et en aval du poste de contrôle non destructif, pour bien positionner le tube qui défile en continu, par rapport aux capteurs à ultrasons.

Le contrôle non destructif doit se faire sur toute la périphérie du tube. Mais il est également essentiel que ce contrôle suive la vitesse linéaire v du tube en sortie de fabrication. On en vient donc à un compromis entre la vitesse linéaire v du tube, la cadence (ou fréquence) de récurrence Fr, le temps d'analyse Ta, l'ouverture de travail Od du palpeur à ultrasons en détection, et la vitesse de rotation ω, le nombre de capteurs assurant la même fonction et la vitesse de propagation des ondes ultrasonores.

Il est également souhaitable que la même installation puisse travailler sur toute une gamme de diamètres de tubes (et aussi d'épaisseurs de tubes), couvrant la gamme de production. Il est alors fréquent de prévoir plusieurs valeurs de la vitesse de rotation ω et de la fréquence de récurrence Fr, valeurs que l'on sélectionne en fonction du diamètre du tube à traiter.

On notera enfin que tout changement de fabrication implique un nouveau réglage des angles d'attaque des ultrasons de chaque capteur sur la périphérie du tube. Cette opération délicate, effectuée manuellement, prend couramment de l'ordre d'une demi-heure, temps pendant lequel la production de tubes est arrêtée. Telles sont les conditions dans lesquelles s'effectue actuellement le contrôle non destructif par ultrasons des tubes, ou d'autres produits profilés et/ou à parois minces, en sortie de fabrication.

Dans le domaine du contrôle non destructif par ultrasons, on utilise souvent la terminologie suivante :

- « balayage » (ou « scan ») désigne une suite de positions relatives tube/capteur,
- « incrément » désigne le pas de balayage (inversement proportionnel à la fréquence de récurrence ou fréquence de tirs ultrasonores),
- « Ascan » désigne le graphe de la tension électrique mesurée aux bornes d'un capteur ultrasonore, avec en abscisse le temps de vol et en ordonnée une représentation de la tension électrique, appelée également amplitude ultrasonore,
- « Bscan » désigne une image relative à une valeur donnée de l'incrément, avec, en abscisse, le balayage correspondant au tir ultrasonore, en ordonnée le temps de vol, et en chaque point l'amplitude ultrasonore convertie en dégradé de gris,
- « Echodynamique » désigne un graphe avec en abscisse l'indication du tir ultrasonore et en ordonnée l'amplitude maximale relevée dans un sélecteur temporel du Ascan pour le tir correspondant,
- « Cscan » désigne une image avec en abscisse et en ordonnée la position équivalente dans un espace plan du point de tir de l'onde ultrasonore et représentant, convertie en dégradé de gris, l'amplitude ultrasonore maximale pour ce tir relevée dans le sélecteur temporel considéré du Ascan ("amplitude de l'image"). Dans le cas d'un tube, un point de l'abscisse du Cscan correspond à une position sur la longueur du tube et un point de l'ordonnée correspond à un position sur la circonférence du tube. Dans le cas d'un produit plat, un point de l'abscisse du Cscan correspond à une position sur la longueur du produit plat et un point de l'ordonnée correspond à un position sur la largeur du produit plat.

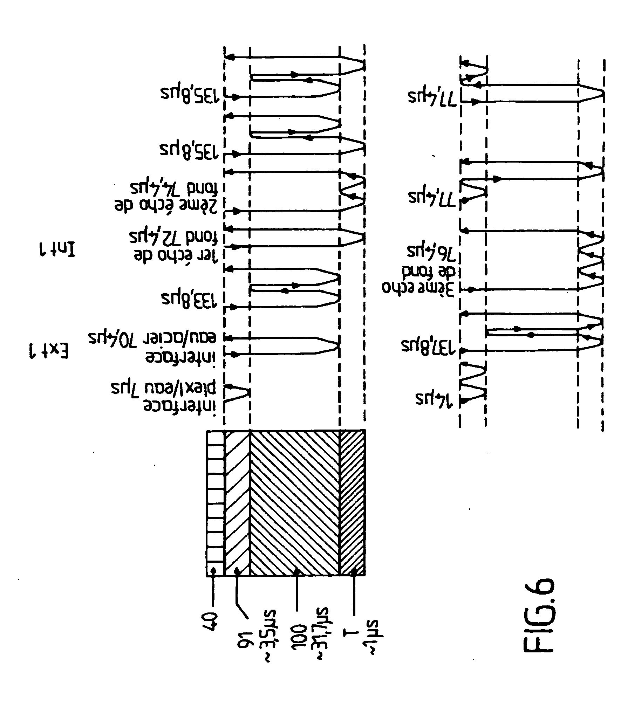

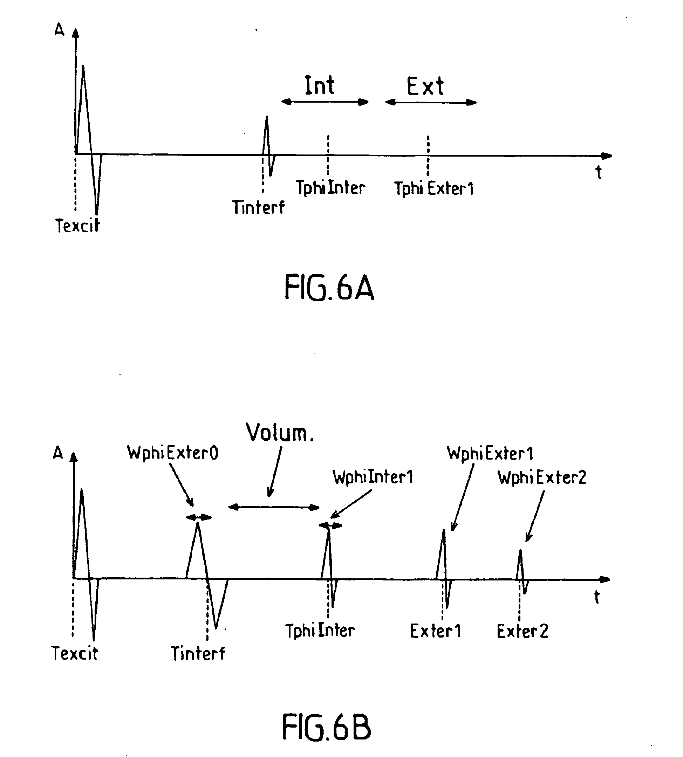

La figure 6 est une vue en coupe longitudinale schématique d'un système formé d'un capteur, de sa colonne d'eau et du tube, et avec illustration de différents trajets ultrasonores formant échos. Elle permet de bien comprendre la complexité de ces trajets, et la difficulté de l'analyse.

La figure 6A est un diagramme amplitude/temps schématique du signal ultrasonore au niveau d'un capteur qui travaille sous incidence oblique. A partir de l'instant Texcit d'excitation du capteur, on trouve un écho d'interface eau-tube à l'instant Tinterf (que l'on peut également noter TphiExter0). Sont marqués ensuite (trait pointillé vertical) l'instant TphiInter où le faisceau d'ultrasons atteint la peau interne du tube, où il se réfléchit et réfracte, ainsi que l'instant TphiExter1 où le faisceau d'ultrasons atteint la peau externe du tube. Du fait de l'incidence oblique, il n'y a pas d'écho réfléchi significatif qui revient au capteur en TphiInter en l'absence d'imperfection à cet endroit. Ceci vaut aussi en TphiExter1.

La figure 6B est un diagramme amplitude/temps schématique du signaux ultrasonore au niveau d'un capteur qui travaille sous incidence normale. La chronologie générale des signaux est la même que pour la figure 6A (à un facteur près, lié à l'incidence). Par contre, sous incidence normale, il y a des échos significatifs en TphiInter et en TphiExter1, même en l'absence d'imperfection aux endroits concernés du tube.

Actuellement, les systèmes de contrôle non destructif utilisés en production de tubes fonctionnent en faisant le rapport K entre :

- l'amplitude As d'un signal provenant du tube à inspecter, et
- l'amplitude A0 du signal provenant d'un défaut étalon de référence, pour le type de contrôle considéré. Ce « défaut étalon de référence » est en général défini sur un tube étalon muni d'un défaut artificiel (par exemple une entaille en U ou en V) de caractéristiques dimensionnelles choisies, par exemple conformément à une norme de contrôle non destructif, et/ou au cahier des charges d'un client.

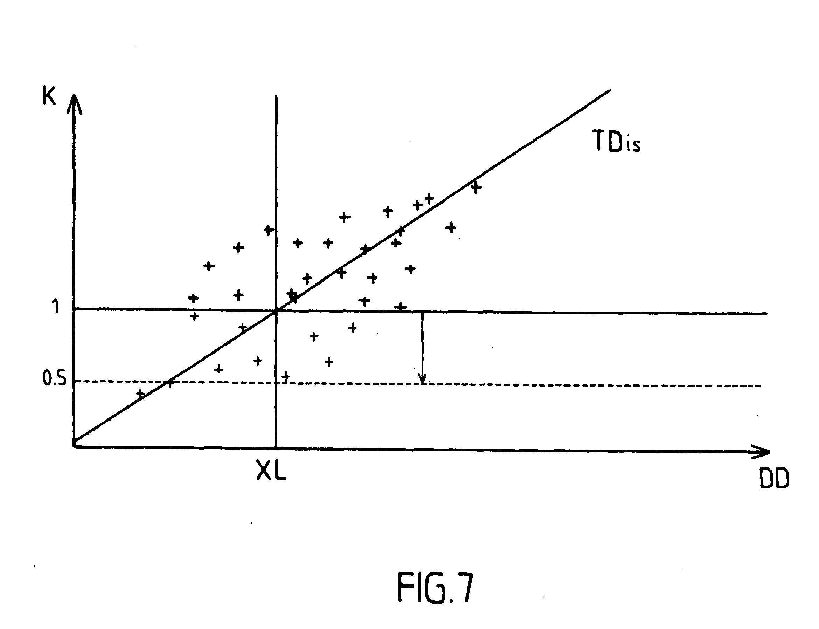

L'hypothèse implicite est que cette amplitude de signal est proportionnelle à la criticité de l'imperfection, c'est-à-dire à sa profondeur (DD). Le graphe de la figure 7 (bien connu de l'homme du métier, voir Nondestructive Testing Handbook - chapitre statistics du volume 7 publié par l'ASNT - American Society for Nondestructive Testing) représente la répartition réelle K = f(DD). Il montre qu'en réalité, la corrélation est très mauvaise (de l'ordre de 0.3 à 0.4 pour le contrôle par ultrasons).

Plus précisément, sur le graphe de la figure 7, si l'on fixe l'amplitude de référence A0 (K=1) sur la valeur XL (profondeur de l'imperfection maximum acceptable) au centre de la distribution (elle-même axée sur l'oblique TDis), on voit que l'on peut encore trouver des imperfections à K = 0,5 de profondeur DD supérieure à XL. Il s'ensuit que, par prudence, on est amené à fixer A0 pour une valeur nettement plus basse que XL. Par conséquent, on écarte en production des tubes qui, pourtant, seraient en fait satisfaisants. C'est d'autant plus néfaste, économiquement, que les techniques de fabrication de tubes demeurent assez lourdes, tant en complexité qu'en besoins en énergie.

La Demanderesse s'est donc attachée à améliorer la situation.

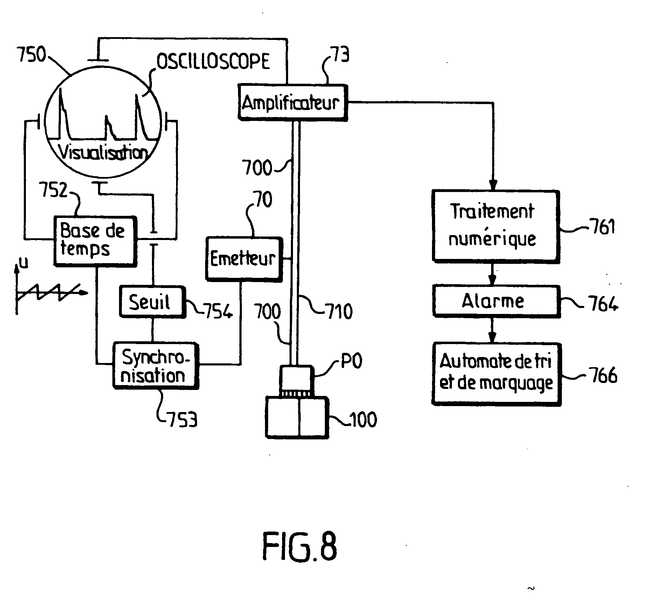

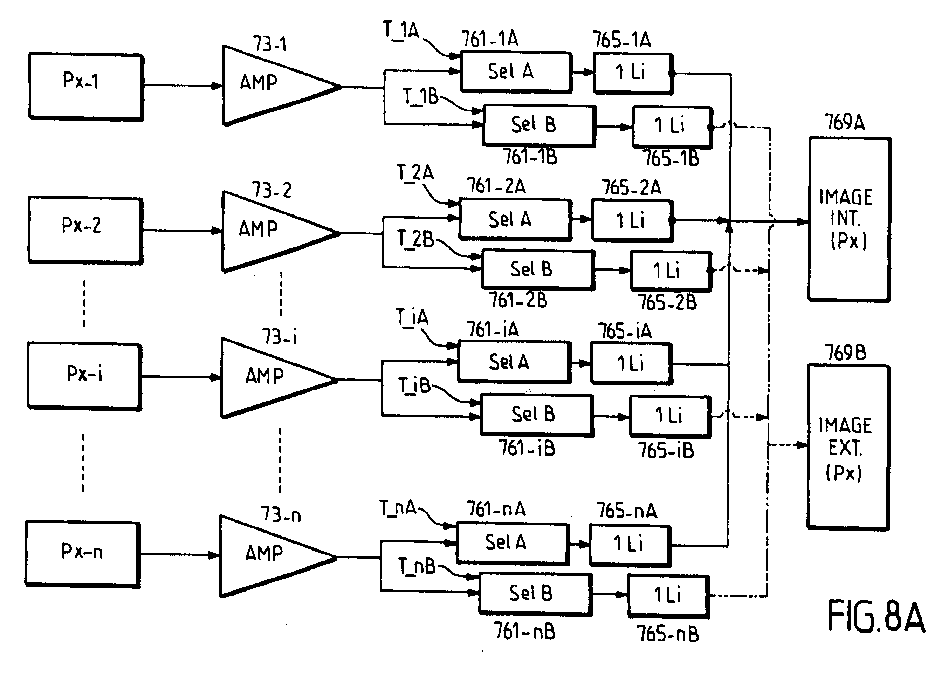

La figure 8 représente un dispositif semblable à celui de la figure 4, mais modifié pour la mise en oeuvre de l'invention.

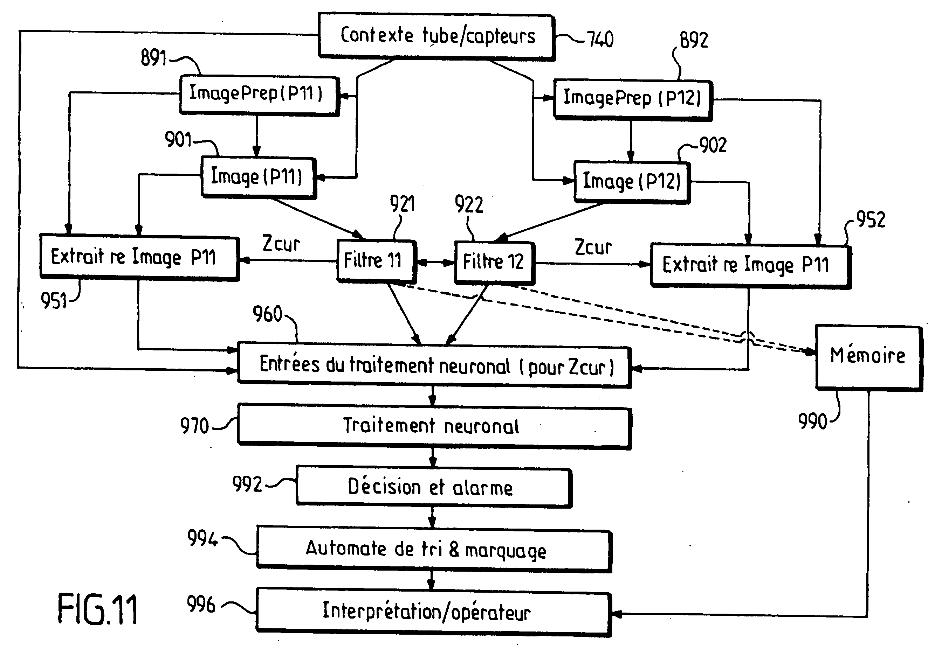

La sortie de l'amplificateur 73 est appliquée à un étage 761, qui numérise l'amplitude du signal issu de l'amplificateur 73, et travaille sur ce signal numérisé. Ce traitement sera décrit ci-après en référence à la figure 11. On peut conserver ensuite des étages 764 et 766 fonctionnellement semblables à ceux de la figure 8. Le signal brut du capteur, tel que visible sur l'oscilloscope 750, est dénommé A-Scan par les hommes du métier. Il comprend des échos selon le schéma défini par la figure 6.

Il est souhaitable de passer à une imagerie des imperfections du tube, à l'aide des signaux d'ultrasons. On décrira maintenant l'obtention d'une image.

En pratique, une image est obtenue en considérant plusieurs explorations successives du tube par un capteur Px, sous des angles successifs qui couvrent sensiblement une section droite du tube. Il est possible de le faire avec des tirs successifs par un seul capteur, en utilisant la rotation relative tube/capteur.

On se place ici, à titre d'exemple non limitatif, dans le cas d'une installation du genre dit à tête tournante.

Sur la figure 8A, on considère un capteur Px, qui peut être de l'un des types P1, P11, P12, P21 et P22 précité. Dans l'exemple illustré, ce capteur Px comprend en fait n capteurs élémentaires Px-1, ..., Px-i, ..., Px-n, qui sont alignés selon l'axe longitudinal du tube, et qui font l'objet d'un tir ultrasonore au même moment. Sur la figure 8A, ce qui est entre les capteurs élémentaires et les images de sortie 769A et 769B peut être considéré comme un convertisseur.

Le signal Ascan du premier capteur élémentaire Px-1 est appliqué à un amplificateur 73-1, suivi de deux voies parallèles : celle du sélecteur 761-1A, suivi du numériseur de ligne 765-1A, et celle du sélecteur 761-1B, suivi du numériseur de ligne 765-1B.

Sur la base des informations obtenues lors du passage du tube étalon, l'opérateur saisit dans le sélecteur 761-1A l'information T_1A correspondant à une indication de position et de largeur temporelle , qui lui désigne, en fonction de la géométrie connue du tube, les instants où il va trouver un « écho de peau interne », relatif à l'intérieur du tube par exemple le premier écho *Int1* de la figure 6. La figure 6A montre plus nettement la fenêtre temporelle « Int » correspondante, autour de TphiInter.

De même, sur la base des informations obtenues lors du passage du tube étalon, l'opérateur saisit dans le sélecteur 761-1B l'information T_1B correspondant à une indication de position et de largeur temporelle, qui lui désigne, en fonction de la géométrie connue du tube, les instants où il va trouver un « écho de peau externe », relatif à l'extérieur du tube, par exemple le premier écho *Ext1* de la figure 6. La figure 6A montre plus nettement la fenêtre temporelle « Ext » correspondante, autour de TphiExter.

Le schéma se répète pour les autres capteurs Px-2, ... Px-i, ... Px-n.

Ainsi, chaque sélecteur temporel 761 travaille par fenêtres temporelles compte tenu de l'instant d'émission des ultrasons, et des intervalles de temps prédéterminables où l'on peut attendre des échos concernant ce sélecteur. L'illustration des figures 6 montre comment l'on peut définir les intervalles de temps intéressants, compte tenu de l'angle d'attaque du faisceau d'ultrasons sur le tube, ainsi que du diamètre (interne ou externe) et de l'épaisseur du tube. Un intervalle de temps donné correspond à un écho donné en un point donné du tube, pour une position relative donnée entre le tube et le capteur.

Pour simplifier, on admet ici que les instants de tirs sont synchronisés sur la rotation relative tube/capteurs, de sorte qu'un capteur élémentaire travaille toujours sur la même génératrice longitudinale du tube. La sortie de son sélecteur fournit donc une suite espacée d'échantillons analogiques de signal, qui correspondent chacun à l'amplitude d'un écho attendu sur une paroi du tube. Ces échantillons du capteur Px-1 (par exemple) sont numérisés en 765.

Le synchronisme avec l'émission peut être assuré par une liaison (non représentée) avec l'émetteur 70, ou avec son déclencheur, le circuit de synchronisation 753, ou sa base de temps 752 (figure 8). L'affichage 750 peut être maintenu, si on le souhaite. Le système peut fonctionner sur tube tournant à vitesse sensiblement constante. Dans ce cas, la vitesse angulaire et l'avance du tube peuvent être mesurées à l'aide d'un codeur angulaire précis, par exemple le modèle RS0550168 fourni par la société Hengstler, et d'un vélocimètre laser, par exemple le modèle LSV 065 fourni par la société Polytec. Le tube peut aussi ne pas tourner, tandis que c'est le système de capteurs qui tourne. Dans ce cas, le vélocimètre laser suffit pour mesurer l'avance du tube, tandis que la vitesse de rotation des capteurs est connue au moyen d'un codeur angulaire.

Pour un tir donné, l'ensemble des capteurs Px-1 à Px-n fournit une ligne d'une image, qui correspond à une section droite du tube. Dans l'autre dimension de l'image, un capteur élémentaire donné fournit une ligne qui correspond à une génératrice du tube.

Les numériseurs 765-1A, 765-2A, ...,765-iA, ..., 765-nA permettent de remplir une image « interne » 769A, relative à la peau interne du tube. Les numériseurs 765-1B, 765-2B, ...,765-iB, ..., 765-nB permettent de remplir une image « externe » 769B, relative à la peau externe du tube (en sortie, des traits mixtes sont utilisés pour clarifier le schéma).

L'image mémorisée en 769A ou 769B, qui est un Cscan tel que défini précédemment, vaut pour le capteur ou groupe de capteurs Px considéré. Chaque point de cette image correspond, transposé en nuances de gris, à une valeur tirée de l'amplitude de l'écho du à la réflexion du signal ultrasons sur une imperfection éventuelle de la zone du tube considérée. Cette valeur (notée K ci-après) peut représenter le rapport entre l'amplitude maximale du signal ultrasonore capté sur le tube encours de test et l'amplitude maximale du signal ultrasonore obtenu avec un « défaut étalon de référence » artificiel, tel que défini plus haut.

Cette image correspond maintenant à une zone du tube, obtenue par la réunion des zones sensiblement annulaires du tube qui correspondent à chacune des lignes numérisées. En fait, il s'agit de zones annulaires si le faisceau d'ultrasons est appliqué sensiblement perpendiculairement à l'axe du tube. On sait qu'il en est différemment pour certains types d'imperfections. Les zones sont alors plutôt elliptiques et, en fait, gauches ou "tordues" dans l'espace. Dans la présente description, l'expression "zones annulaires" couvre ces différentes possibilités.

Il est à noter que pour obtenir cette reconstitution complète de l'image C-Scan, l'information supplémentaire de positionnement du tube par rapport au capteur est nécessaire. Elle est disponible en entrée séparée 740. Cette information vient d'un codeur XYZ ou d'un laser XYZ. Comme le tube peut être assimilé à un cylindre sans épaisseur, l'information de position peut être réduite à deux dimensions.

On comprend que la mise en oeuvre de l'invention sur un banc existant de contrôle par ultrasons ("UT bench") implique :

- l'accessibilité aux données brutes de contrôle par ultrasons ("UT Raw Data"), qui se fait par exemple à l'aide d'une carte d'acquisition, comme le modèle NI 6024 série E ou NI 6251 série M de la société National Instrument,
- la disponibilité d'une information en ligne sur la vitesse de rotation (du tube ou de la tête de capteurs), et
- la disponibilité d'une information en ligne sur la vitesse d'avance du tube.

Le schéma de la figure 8A peut être appliqué :

- en parallèle à un capteur de type P11 et à un capteur de type P12, qui observent la même zone du tube selon deux directions différentes. Chaque capteur va permettre d'obtenir une image interne 769A, et une image externe 769B. Ensuite, l'une des images pourra être choisie en fonction d'une commande notée « Int/Ext ».
- en parallèle à un capteur de type P21 et à un capteur de type P22, qui, là aussi, vont chacun permettre d'obtenir une image interne 769A, et une image externe 769B.

Le schéma de la figure 8A peut aussi être appliqué à un capteur de type P1, auquel cas on prévoit trois voies parallèles derrière chaque amplificateur (au moins virtuellement). L'une des voies fonctionne sur un créneau temporel répétitif positionné comme indiqué en « Volum. » sur la figure 6B. Cette voie permet un contrôle d'imperfections en volume, c'est-à-dire dans l'épaisseur du tube.

Les deux autres voies peuvent fonctionner respectivement sur les créneaux temporels répétitifs positionnés comme indiqué en « WphiExter0 » et en « WphiInter1 » sur la figure 6B. Ces deux autres voies permettent une mesure de l'épaisseur du tube.

La distinction entre les 3 voies est purement fonctionnelle (virtuelle). En effet, lesdites deux autres voies peuvent être physiquement la même, dans laquelle on discrimine les instants ou créneaux « WphiExter0 » et « WphiInter1 ». On peut aussi utiliser une seule voie physique, dans laquelle on discrimine les instants ou créneaux « WphiExter0 », « Volum. » et « WphiInter1 ».

Il est représentatif de décrire plus en détail le cas d'un capteur de type P11 avec un capteur de type P12. C'est ce que l'on fera maintenant.

Il est rappelé que ces deux groupes de capteurs P11 et P12 servent à la détection d'imperfections longitudinales sur les tubes. Le contrôle ultrasonore est réalisé avec des tirs d'ultrasons (US) dans deux directions privilégiées ("clock wise" - "counter clock wise"):

- Un capteur ou groupe de capteurs P11 fournit une image ultrasonore du tube dans une direction de travail ("clock wise").
- Un deuxième capteur ou groupe de capteurs P12 fournit une image ultrasonore du même tube dans une autre direction de travail ("counter clock wise").

Ainsi, les imperfections longitudinales sont avantageusement détectées avec 2 capteurs ou groupes de capteurs dont les axes de faisceau sont inclinés symétriquement par rapport à un plan perpendiculaire à l'axe du tube. L'inclinaison est par exemple d'environ +/- 17°. Ceci fournit un exemple d'application du système à deux capteurs, ou deux groupes de capteurs, tel que mentionné plus haut.

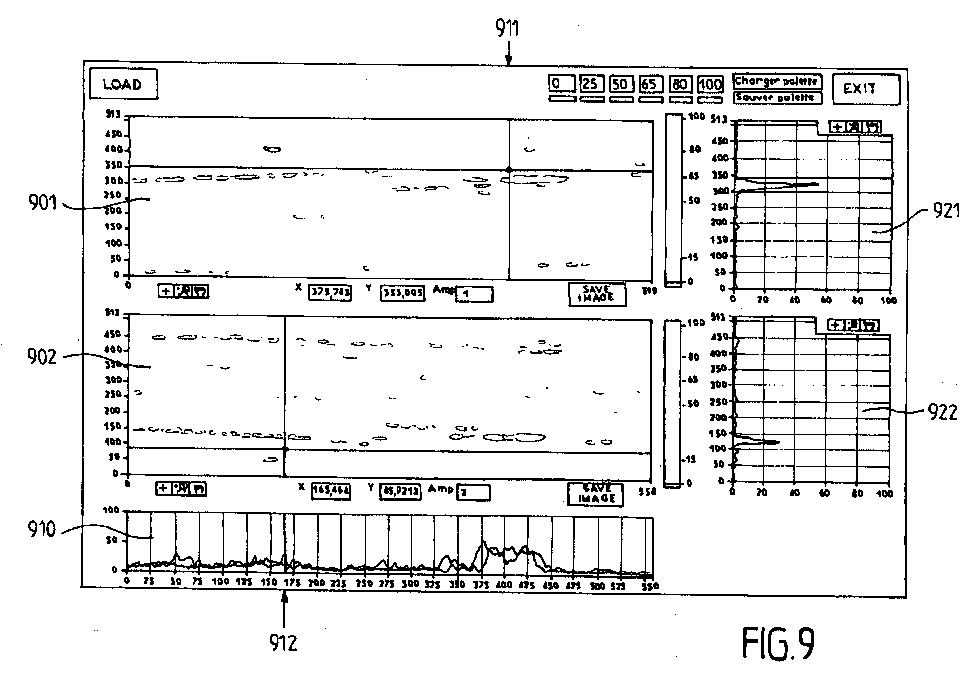

La figure 9 montre un exemple de deux images 901 et 902 de type C-Scan, l'une au dessus de l'autre, avec la même référence de temps. Ces deux images proviennent respectivement des informations de 2 groupes de capteurs en situations opposées, ici les groupes de capteurs de type P11 et P12 (en variante les groupes de capteurs de type P21 et P22), et ceci pour l'un des deux cas « Interne » / « Externe ».

Les images des blocs 901 et 902 représentent le signal en niveau de gris (en fait, en palette de couleurs). Des indications complémentaires sont affichées à volonté, dont des images complémentaires :

- 921, qui est une vue de l'amplitude du signal selon une ligne verticale 911 choisie dans l'image 901,
- 922, qui est une vue de l'amplitude du signal selon une ligne verticale 912 choisie dans l'image 902,
- 910, qui contient deux courbes, représentant le maximum rencontré sur la verticale correspondante dans les images 901 et 902, respectivement.

Il est maintenant fait référence à la figure 11. Les blocs d'images 901 et 902 représentent les images mémorisées pour les groupes de capteurs P11 et P12, par exemple telles que visibles sur la figure 9. L'image 901 a été préparée de la manière illustrée sur la figure 8A. Le bloc convertisseur 891 de la figure 11 correspond au montage de la figure 8A, appliqué au capteur P11. De même, le bloc convertisseur 892 correspond lui aussi au montage de la figure 8A, mais appliqué au capteur P12. Les blocs convertisseurs 891 et 892 utilisent les données de contexte tube/capteurs du bloc 740. Ces données sont relatives aux caractéristiques du tube en cours d'examen et des capteurs en cours d'utilisation. Elles sont également transmises aux blocs convertisseurs 891 et 892, aux blocs d'images 901 et 902, ainsi qu'au bloc combinateur 960.

Après les blocs 901 et 902 sont illustrés les filtres 921 et 922, qui permettent notamment de réaliser des extraits des images, et de leurs données de préparation, en tant que données d'entrée réunies par le bloc combinateur 960 pour le traitement neuronal 970, comme on le verra.

Dans le mode de réalisation décrit, le filtre 921 possède :

- une sortie de signal Zcur désignant une zone de travail dans l'image. Cette sortie est utilisée par une fonction d'extraction 951 qui réalise en conséquence un extrait de l'image (Cscan) pour la zone Zcur, et un accès à la préparation d'image 891 pour y obtenir des informations mémorisées (dites Ascan) relatives à la même zone Zcur. L'ensemble de ces données est transmis par la fonction d'extraction 951 au combinateur 960, comme entrées du traitement neuronal 970,
- une sortie fournissant des informations obtenues par filtrage, certaines au moins realtives à la zone Zcur, qu'il transmet comme entrée du traitement neuronal (combinateur 960),
- en option (trait tireté) des sorties de données complémentaires vers une mémoire 990.

Il en est de même pour le filtre 922, avec la fonction d'extraction 952, pour la même zone courante Zcur.

Le traitement neuronal 970 alimente une logique de décision et d'alarme 992, qui pilote un automatisme de tri et marquage 994. Il peut être prévu une interface d'interprétation par un opérateur 996, laquelle peut présenter tout ou partie des données contenues dans la mémoire 990, en rapport avec la portion de tube en cours d'examen.

Ici, la figure 11 traite des informations provenant au minimum de deux groupes de capteurs assurant la même fonction ou destinés au même type de contrôle (les 2 groupes P11 et P12 ou les 2 groupes P21 et P22). Le même schéma peut servir à traiter les informations provenant d'un plus grand nombre de groupe de capteurs destinés à des contrôles de type différent. Le nombre d'images traitées en même temps est augmenté d'autant.

La fonction primaire des filtres 921 et 922 est de déterminer des zones d'imperfections dans les images Cscan 901 et 902. De façon générale, le filtrage est agencé pour repérer les zones à analyser, et y distinguer les imperfections des autres indications. Le filtrage travaille sur deux portions homologues des deux images de la figure 9. En fait, les deux filtres travaillent conjointement, comme reflété par la liaison bidirectionnelle qui les joint sur la figure 11.

Par balayage de l'image numérique, on localise d'abord les endroits de l'image où existent des imperfections potentielles.

A cet effet, il est possible d'appliquer un seuil fixe établi par étalonnage.

La Demanderesse préfère actuellement utiliser un seuil qui s'adapte au niveau de bruit en cours dans l'image. La méthode est fondée sur la théorie de la détection d'un signal dans un bruit blanc, qui peut se fonder sur deux hypothèses :

Hypothèse H0 : mesure = bruit blanc de moyenne m_b et d'écart-type std_b
Hypothèse H1 : mesure = signal + bruit blanc

On procède à des tests statistiques, qui permettent de déterminer si l'on est dans le cadre de l'hypothèse H0, ou de l'hypothèse H1. Ces calculs statistiques sont effectués en temps réel sur n points glissants de l'image correspondant à des tirs consécutifs, le nombre n pouvant être déterminé par l'apprentissage.

Selon cette méthode (cas dit "additif gaussien"), on peut par exemple utiliser le critère de Neyman-Pearson pour déterminer un seuil de détection selon une probabilité de fausse-alarme (pfa) donnée. Cela s'exprime par la formule [21] annexée. On utilise la fonction cumulative gaussienne, nommée en général Q (ou encore la fonction d'erreur erf), qu'il faut inverser pour obtenir le seuil, selon la formule [22] annexée.

En pratique, on constate fréquemment la présence de bruit de fond pouvant avoir plusieurs origines (par exemple: présence d'eau à l'intérieur du tube, ronflement électrique, phénomènes acoustiques dus à la structure de la matière du produit contrôlé). L'usage d'un seuil variable évite les fausses alarmes qui se produisent si l'on applique un seuil fixe.

Parmi les autres fausses indications susceptibles d'apparaître, les parasites se manifestent par des pics très brefs dans le signal d'ultrasons. Ces parasites peuvent être écartés par des algorithmes simples que l'on peut appeler algorithmes de comptage cumulatif ou encore intégrateurs (exemple: "n coups avant alarme" ou "double seuil").

La demanderesse a encore considéré la "spire", qui est le trajet suivi par le capteur le long de la surface cylindrique à laquelle le tube est assimilé. Un filtrage peut être effectué le long de chaque spire pour encore réduire le taux de fausses alarmes. On utilise à cet effet par exemple un filtre de Butterworth, et/ou une transformée de Fourier discrète, telle qu'une transformée de Fourier rapide. Cette technique est appliquée à chaque ligne numérique.

Le même genre d'algorithme peut être appliqué dans le sens de la longueur du tube.

Ainsi, des imperfections potentielles sont localisées. Lorsqu'une imperfection est repérée, sa position correspond à la position analysée dans les images de la figure 9 (par exemple). Cette image 2D correspond à une développée du tube, assimilé à un cylindre sans épaisseur. Les indications de position radiale/épaisseur (ou plus simplement de situation interne, externe ou en masse de l'imperfection) peuvent être représentées comme des attributs des points de l'image. On aura ainsi :

- deux images 2D représentant les imperfections éventuelles en peau externe du tube,
- deux images 2D représentant les imperfections éventuelles en peau interne du tube, et
- une image 2D représentant les imperfections éventuelles dans l'épaisseur du tube.

On considère maintenant les imperfections « confirmées », après élimination des parasites et des fausses alarmes, notamment.

Pour la suite, la Demanderesse a choisi actuellement de travailler sur une zone d'image de taille fixe. Il faut donc cadrer cette zone sur les données d'existence d'imperfection que l'on vient d'obtenir.

Autrement dit, il y a lieu de positionner les points repérés comme étant supérieurs au seuil pour déterminer la zone complète autour d'une imperfection. C'est un besoin par exemple, si l'on souhaite déterminer l'obliquité d'une imperfection.

L'algorithme s'articule autour de différentes étapes :

- détection de contour (gradient de Roberts par exemple),
- dilatation (rassemblement des contours proches),
- érosion, puis fermeture, ce qui permet de déterminer un masque autour des imperfections,

- une dernière étape d'entourage permet de localiser complètement l'imperfection.

Pour chaque imperfection, on obtient ainsi les coordonnées de la zone d'image correspondante, qui seront utiles pour l'analyse par réseau de neurones qui intervient ensuite.

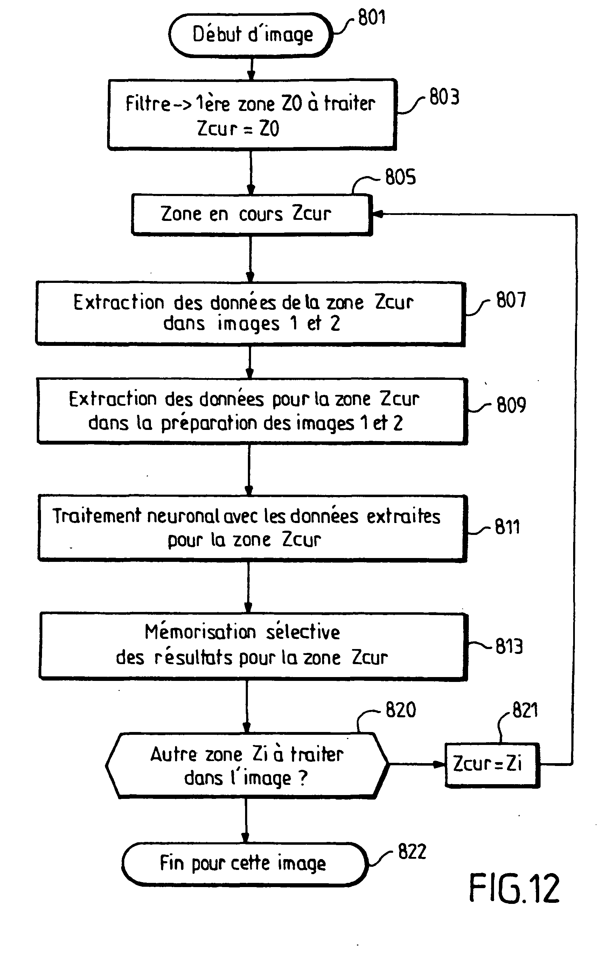

La figure 12 illustre ce traitement des zones d'image sous la forme d'un diagramme de flux.

En début d'images (801), on a de zéro à $p$ zones d'image à traiter, comme présentant une imperfection confirmée. L'opération 803 suppose qu'il existe au moins une première zone, laquelle sert de zone courante à traiter Zcur en 805. Pour cette zone Zcur :

- l'opération 807 extrait sélectivement les données des images 901 et 902 qui correspondent à cette zone (définie par ses coordonnées dans l'image).
- l'opération 809 extrait sélectivement des données qui sont intervenues dans la préparation des images 901 et 902, et qui correspondent à la zone Zcur. Des exemples de ces données seront donnés ci-après.
- l'opération 811 réalise le traitement neuronal proprement dit, sur lequel on reviendra.
- Les résultats obtenus pour la zone Zcur sont mémorisés sélectivement en 813, en correspondance d'une désignation de la zone Zcur.
- Le test 820 recherche s'il existe une autre zone à traiter dans l'image, auquel cas on recommence en 805 avec cette autre zone comme indiqué en 821 ; sinon le traitement de la ou des images en cours est terminé (822).

Dans le cas du traitement du capteur P1, il n'y a qu'une seule image, ce qui change le nombre de paramètres d'entrée. A part cela, le traitement peut être généralement le même.

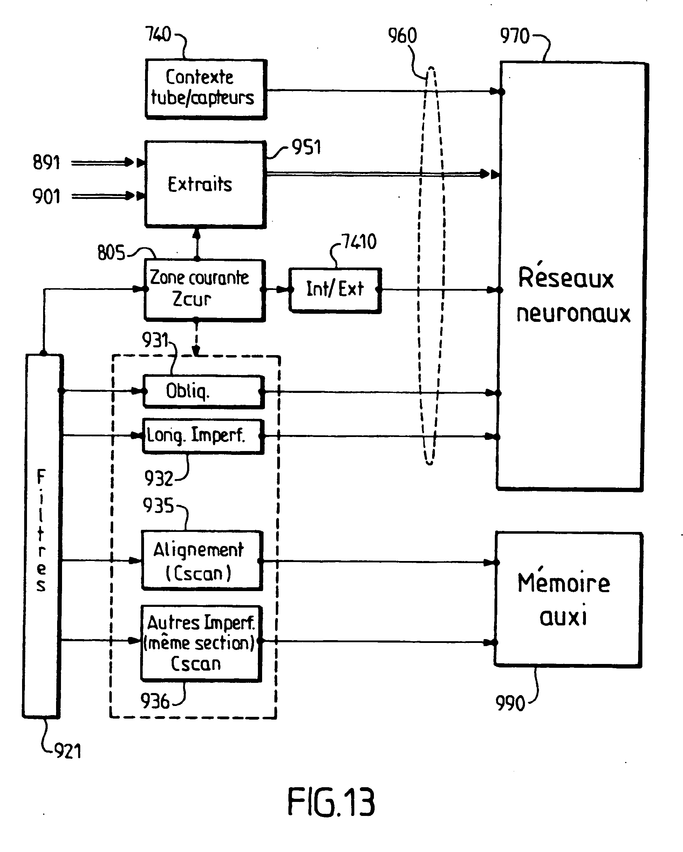

Après la détermination de chaque zone d'intérêt Zcur, le filtrage peut comporter d'autres fonctions. Pour ces autres fonctions, la figure 13 illustre de façon schématique l'interaction entre le filtrage et la suite des opérations illustrées sur la figure 11.

La figure 13 est semblable à la figure 11, mais seulement pour l'image 901. Elle fait apparaître :

- les éléments de contexte tube-capteurs du bloc 740,
- l'extracteur 951 qui trouve les données pour la zone Zcur, dans l'image 901 et sa préparation 891,
- un bloc interne/externe 7410, indiquant si l'imperfection dans la zone Zcur considérée est située en peau interne ou en peau externe.

Ce que le filtrage ajoute aux données de base, est défini en plus de détails à savoir, pour chaque zone Zcur (bloc 805), comme l'indique le contenu du cadre en trait tireté :

- une recherche de l'angle d'obliquité en 931,
- une indication de longueur d'imperfection 932,

Il peut s'y ajouter encore, notamment :

- une indication d'alignement en C-Scan, en 935, et
- en 936, une indication sur l'existence d'autres imperfections dans la même section droite du tube.

Dans le mode de réalisation décrit, les données telles que 935 et 936 vont vers la mémoire 990. Le reste va vers les réseaux neuronaux 970. Ceux-ci sont ici séparés en deux fonctions, comme on le verra maintenant.

Circuits neuronaux

Une imperfection dans un tube peut être définie par sa position, son type, et sa gravité souvent assimilée à sa profondeur. Dans le mode de réalisation décrit, le type et le degré de profondeur d'une imperfection de tube sont déterminés séparément à l'aide de deux processus neuronaux de même structure générale, que l'on détaillera maintenant sur un exemple.

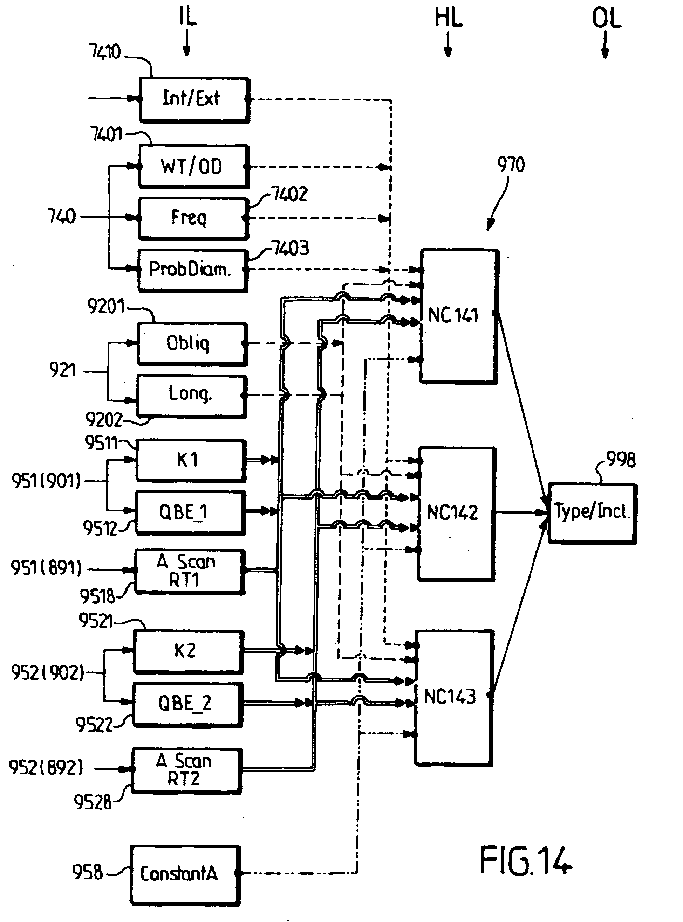

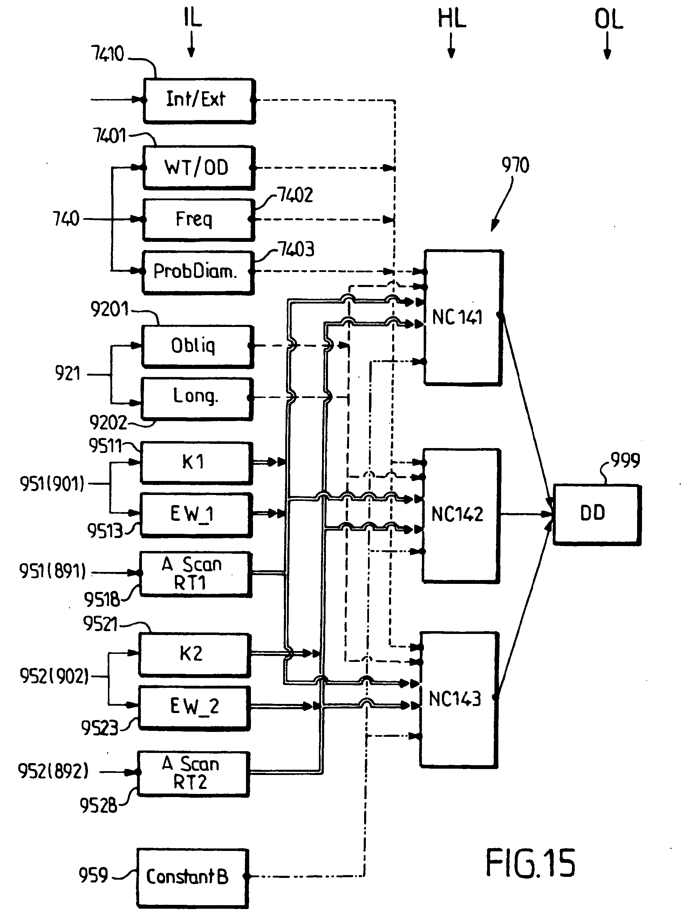

Le cas du type de l'imperfection est traité selon la figure 14, tandis que le cas de la gravité est traité selon la figure 15.

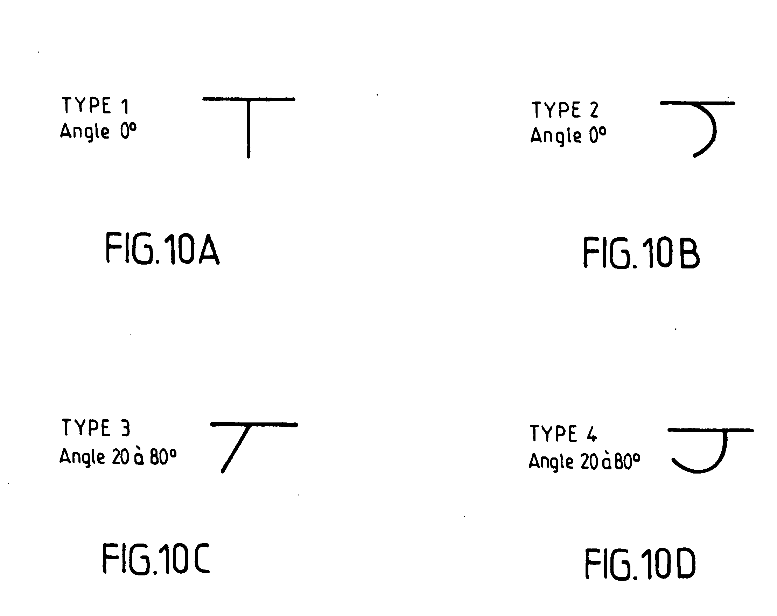

Les types peuvent être définis par exemple comme illustré sur les figures 10A à 10D. Ces figures illustrent quatre types, constituant un choix simplificateur par rapport à la liste des imperfections fournies par l'API et pouvant être produits par les processus d'élaboration du tube. Les intitulés en français et en anglais sont ceux utilisés par les hommes du métier pour désigner la nature des imperfections. On observe que les imperfections des types 1 et 3 sont droites, celles des figures 2 et 4 arquées (à "chord").

Une correspondance entre les imperfections réelles et les quatre types ci-dessus peut être définie comme suit :

| Nom en français | Nom en anglais | Affectation |
|---|---|---|
| Entaille | Notch | TYPE 1 |
| Tapure | Crack | TYPE 1 |
| Paille/repliure perpendiculaire ou droite (laminage) | Seam (perpendicular) | TYPE 1 |
| Paille/repliure (laminage) | Seam (arcuate), "overlap" | TYPE 2 |
| Gravelure | Saliver | TYPE 3 |
| Origine billette | Rolled-in-slug | TYPE 4 |
| Rayure | Gouge | TYPE 4 |
| Inclusion | Inclusion | TYPE 4 |
| Manque de matière ("défourni") | Bore-slug | TYPE 4 |
| Chevauchement/recouvrement/repliure | Lap | TYPE 4 |

Ici, les figures 14 et 15 utilisent toutes deux des circuits neuronaux à trois neurones intermédiaires (ou "neurones cachés"), notés NC121 à NC123 pour la figure 14, et NC141 à NC143 pour la figure 15.

Les figures 14 et 15 ont en commun un certain nombre d'entrées. Pour tenter de faciliter la compréhension, les entrées sont illustrées par des types de traits différents. Les traits doubles indiquent que les entrées sont multiples, c'est-à-dire répétées pour chaque point de la zone Zcur.

Tout d'abord, en 7410, il provient, conformément à l'état considéré des sélecteurs 761 concernés, une information indiquant s'il s'agit de traiter d'une imperfection située en peau interne ou en peau externe de la paroi du tube.

La seconde catégorie de grandeurs d'entrée communes comprend les grandeurs de contexte, qui viennet du bloc 740 (figure 13) :

- en 7401, *WT*/*OD*, qui est le rapport de l'épaisseur de paroi au diamètre du tube,
- en 7402, *Freq*, qui est la fréquence de travail des sondes à ultrasons,
- en 7403, *ProbDiam*, qui est le diamètre utile des sondes à ultrasons.

La troisième catégorie de grandeurs communes comprend des quantités issues du filtrage qui peuvent être considérées comme communes aux deux capteurs 921 et 922 (ou plus). On fait par exemple la moyenne des résultats sur les deux capteurs, ou bien on prend le résultat le plus représentatif (maximum/minimum, suivant le cas) Ces quantités sont les grandeurs en 9201, l'obliquité du défaut, et en 9202 sa longueur. Ces deux grandeurs sont aisément repérables sur les deux images de la figure 9, qui ont une symétrie miroir.

Il est maintenant fait référence à la figure 14 seulement. La catégorie suivante de grandeurs comprend des grandeurs de mesures distinctes pour chacun des deux capteurs (ou groupe de capteurs), et pour chacune des zones Zcur, ce qui est reflété sur le dessin par l'usage d'un trait double.

Pour un premier capteur, on a :

- en 9511, *K1*, qui est le rapport entre l'amplitude maximale du signal ultrasonore rencontré dans la zone Zcur et sur l'image 901, par rapport à l'amplitude maximale du « défaut étalon de référence » précité. En fait, dans l'exemple, l'amplitude en chaque pixel de l'image 901 est définie par ce rapport ; K1 est alors simplement le maximum d'amplitude rencontré dans la zone Zcur de l'image 901 ; on note Pmax1 le point de la zone Zcur où ce maximum est rencontré.
- en 9512, QBE1 qui est une grandeur du C-Scan dite *QuantBumpsEchodyn*, représentant le nombre de maxima locaux rencontrés dans la zone Zcur de l'image 901 à proximité du point Pmax1 d'amplitude maximale. Ce nombre QBE1 est limité aux maximas locaux rencontrés au voisinage de Pmax1, de part et d'autre, mais sans que l'amplitude du signal ne soit redescendue en dessous d'un niveau correspondant au bruit de fond. QBE1 va généralement prendre soit la valeur 1, soit la valeur 2.

Ces deux grandeurs proviennent de l'image 901, via l'extracteur 951, ce que reflète la notation 951(901) sur le dessin. Il s'y ajoute :

- en 9518, RT1 qui est une grandeur représentant le temps de montée de l'écho dans le signal ultrasonore natif dit A-Scan, (il s'agit de l'écart entre le moment où le signal est maximal et le dernier moment antérieur où le signal est au niveau du bruit de fond, exprimé couramment en micro-secondes). Cette grandeur RT1 a été antérieurement mesurée en sortie de l'amplificateur 73 concerné (figure 8A) ; elle a été stockée, par exemple en 891, en correspondance du point du tube qu'elle concerne. C'est ainsi qu'elle peut être récupérée sélectivement par l'extracteur 951.

Pour le second capteur, on a :

- en 9521, *K2*, qui est défini comme K1, mais pour l'image 902 au lieu de l'image 901. Dans l'exemple, K2 est simplement le maximum d'amplitude rencontré dans la zone Zcur de l'image 902 ; on note Pmax2 le point de la zone Zcur où ce maximum est rencontré.
- en 9522, QBE2 est défini comme QBE1, mais dans l'image 902 au lieu de l'image 901, et au voisinage de Pmax2. Là aussi, QBE2 va généralement prendre soit la valeur 1, soit la valeur 2.

Ces deux grandeurs proviennent de l'image 902, via l'extracteur 952. Il s'y ajoute :

- en 9528, RT2 qui est une grandeur représentant le temps de montée de l'écho dans le signal natif dit A-Scan. Comme précédemment, cette grandeur RT2 a été antérieurement mesurée en sortie de l'amplificateur 73 concerné (figure 8A) ; elle a été stockée, par exemple en 892, en correspondance du point du tube qu'elle concerne. C'est ainsi qu'elle peut être récupérée sélectivement par l'extracteur 952.

La dernière entrée 958 du réseau neuronal est une valeur constante, notée *ConstantA*, qui représente une constante déterminée lors du calage du modèle et résultant de l'apprentissage.

La sortie 998 de la figure 14 est une grandeur indicative du type de l'imperfection et son inclinaison moyenne (définie en fonction du type).

Le cas du degré de profondeur (ou gravité) de l'imperfection est traité selon la figure 15. Les entrées sont les mêmes que pour la figure 14, sauf:

- pour le premier capteur, le bloc 9512 est remplacé par un bloc 9513, qui traite une grandeur EW_1, ou *EchodynWidth*, qui est la largeur à mi-hauteur (50%) de la forme d'onde échodynamique, pour ce premier capteur. Cette grandeur EW_1 est tirée du Cscan.
- de même, pour le second capteur, le bloc 9522 est remplacé par un bloc 9523, qui traite la grandeur EW_2, ou *EchodynWidth*, qui est la largeur à mi-hauteur (50%) de la forme d'onde échodynamique, pour ce second capteur.
- en 959, la constante, notée maintenant *ConstantB*, est différente.
- la sortie 999 est une indication de gravité d'imperfection, notée DD.

On note que, dans les deux cas (figures 14 et 15), un circuit neuronal 970 donné traite un extrait d'image 951 pour l'un des groupes de capteurs ultrasonores, ainsi qu'un extrait d'image 952 correspondant à la même zone, mais provenant d'un autre groupe de capteurs.

La Demanderesse a observé qu'il était possible d'obtenir des résultats très satisfaisants, sous réserve d'un ajustement convenable des paramètres des circuits neuronaux, et éventuellement de leur nombre, pour optimiser la prédiction.

De plus, la demanderesse a constaté que par combinaison des informations recueillies par les différents réseaux de neurones il était possible d'affiner encore la prédiction.

Globalement, les paramètres d'entrée du réseau de neurones sont alors des caractéristiques des deux images (rapport de l'amplitude max par rapport à l'amplitude de l'étalon, largeur d'écho, orientation de l'écho représentative de l'obliquité de l'imperfection...) et du contrôle (capteur, dimensions du tube...).

Les paramètres de sorties sont les caractéristiques de l'imperfection (profondeur, inclinaison/ type). La décision et/ou alarme (992) peut se prendre automatiquement à l'aide de critères de décision choisis, à base de seuils, assortis d'une marge de sécurité selon les besoins. Pour définir ces seuils, on peut s'aider des résultats de l'apprentissage.

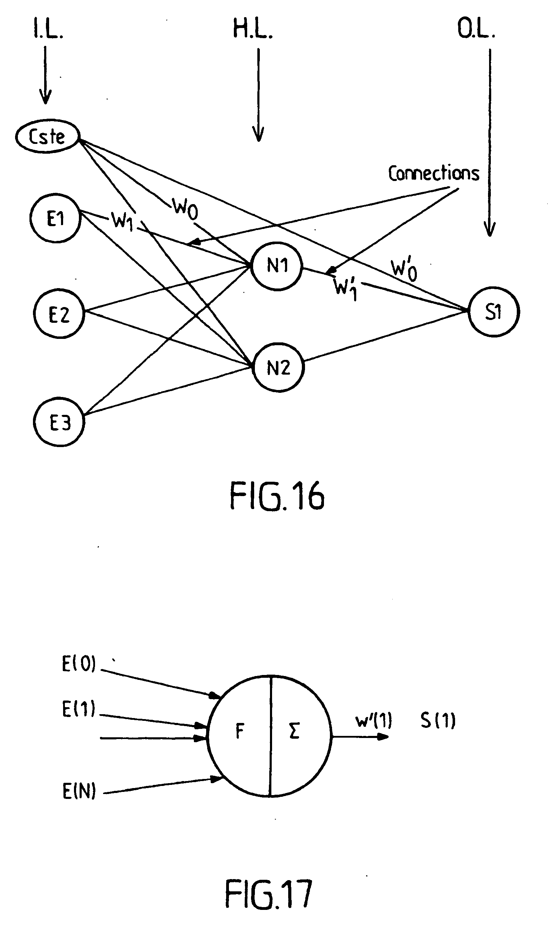

Il est maintenant fait référence à la Figure 16, qui est un modèle du circuit neuronal élémentaire des figures 14 ou 15, pour deux capteurs.

Ce modèle comprend un niveau ou couche d'entrée IL ("Input Layer"), qui regroupe tous les paramètres d'entrée (souvent appelés "neurones d'entrée"). Pour ne pas surcharger la figure, sont seuls représentés trois neurones E1 à E3, plus une constante, qui peut être considérée elle aussi comme un neurone E0. Cette constante est le plus souvent appelée « biais ». En pratique, les neurones d'entrée sont plus nombreux, conformément à la figure 14 ou à la figure 15, selon le cas.

Ensuite est prévu au moins un niveau ou couche HL ("Hidden Layer" ou "couche cachée"), qui comprend k neurones (dont seulement 2 sont représentés pour ne pas surcharger le dessin).

Enfin vient le neurone de sortie SI, qui fournit la décision, sous la forme d'une valeur représentative de l'importance d'une imperfection du tube, par exemple une imperfection longitudinale. Cette sortie correspond au bloc 998 sur la figure 14 et 999 sur la figure 15.

On notera que le "neurone" - constante E0 intervient pour pondérer non seulement la ou les couches cachées HL, mais aussi le neurone de sortie (couche OL ou "Output Layer").

Le comportement général d'un circuit neuronal tel qu'utilisé ici est donné par la formule [11] de l'Annexe 1, où $w_{ij}$ est le poids affecté au signal Xi présent à l'entrée du neurone j.

Dans le circuit prévu ici, un neurone élémentaire se comporte selon la formule [12], comme cela est schématisé sur la figure 17.

La sortie S1 de la figure 16 fournit une valeur estimée qui correspond à la formule [13] de l'annexe 1.

Par apprentissage, la Demanderesse a ajusté les neurones cachés et leurs poids de sorte que la fonction f soit une fonction non-linéaire, continue, dérivable et bornée. L'exemple actuellement préféré est la fonction arc-tangente.

On sait qu'un réseau neuronal détermine ses coefficients $w_{ij}$ communément appelés synapses par apprentissage. Cet apprentissage doit faire intervenir typiquement 3 à 10 fois plus d'exemples qu'il y a de poids à calculer, tout en couvrant correctement la plage des conditions de travail désirées.

Partant d'exemples Ep (p = 1 à M), on détermine pour chaque exemple l'écart $D_p$ entre la valeur $S_p$ donnée par le circuit neuronal et la valeur réelle $R_p$ mesurée ou définie expérimentalement. C'est ce que rappelle la formule [14].

La qualité de fonctionnement du circuit neuronal est définie par une grandeur globale d'écart Cg, dite "coût". Elle peut s'exprimer par exemple selon la formule [15], comme une grandeur globale d'écart quadratique pondéré.

L'apprentissage pose différents problèmes dans un cas comme celui du contrôle des imperfections dans les tubes, notamment du fait qu'il s'agit de techniques lourdes, comme déjà indiqué.

La demanderesse a tout d'abord conduit un premier apprentissage sur simulation. On peut utiliser à cet effet le logiciel CIVA développé et commercialisé par le Commissariat à l'Energie Atomique, France. Ce premier apprentissage a permis de repérer les paramètres influents, et de construire une première version du réseau de neurones sur la base d'imperfections virtuelles. La fonction de coût a été optimisée.

La demanderesse a ensuite conduit un second apprentissage combinant les résultats obtenus sur simulation et des imperfections artificielles, c'est-à-dire créées intentionnellement sur des tubes réels. Ce second apprentissage permet de construire une seconde version du réseau de neurones, dont la fonction de coût a également été optimisée.

La demanderesse a ensuite combiné les résultats obtenus sur des imperfections artificielles, et sur un ensemble d'imperfections présentes sur des tubes réels, ces imperfections étant connues avec précision par des mesures faites a posteriori hors la chaîne de fabrication. Cette troisième phase a permis de valider la dernière version du réseau de neurones. Cette version s'est avérée opérationnelle pour la surveillance en fabrication. Toutefois, lors de son implantation sur une installation nouvelle ou modifiée, il convient actuellement de lui faire subir un "calage", à l'aide d'une dizaine d'échantillons artificiels couvrant l'ensemble de la gamme des imperfections à traiter. Il s'ensuit naturellement une optimisation.

Les figures 11, 12, 14 et 15 ont été décrites dans le cadre des capteurs P11 et P12.

Le même principe peut s'appliquer au groupe de capteurs P1. Dans ce cas, il n'y aura pas d'image 2, et le réseau construit a moins de paramètres d'entrée, comme déjà indiqué. Les circuits décrits pour deux capteurs peuvent être utilisés pour un seul, mais sans paramètres d'entrée pour la partie « Image 2 ».

Le même principe peut s'appliquer aussi aux deux groupes de capteurs P21 et P22, chargés de détecter les imperfections transversales, en tenant compte du fait que les capteurs sont pour cette détection inclinés (par exemple de +/-17°) dans un plan passant par l'axe du tube.

On comprendra que, dans chaque cas, il intervient un traitement numérique du type défini par la figure 11, éléments 992 à 996 exceptés. Ce traitement est globalement désigné par 761, conformément à la figure 8, où il est suivi des blocs 764 et 766.

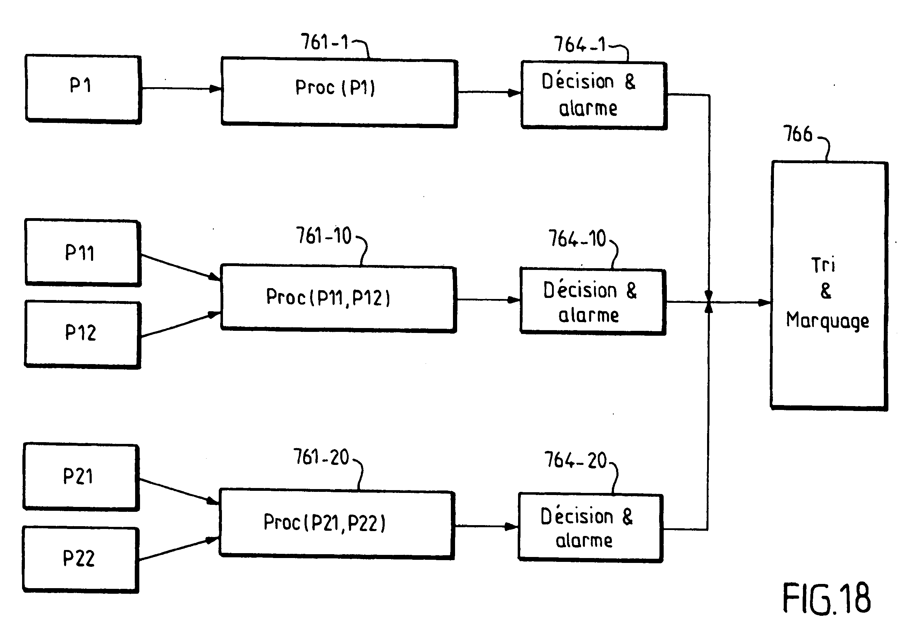

On obtient ainsi un ensemble tel que représenté par la figure 18, avec :

- pour le capteur P1, un traitement 761-1, suivi d'une phase de décision et alarme 764-1 ;
- pour les capteurs P11 et P12, un traitement 761-10, suivi d'une phase de décision et alarme 764-10 ;
- pour les capteurs P21 et P22, un traitement 761-20, suivi d'une phase de décision et alarme 764-20 ;
- les trois phases 764-1, 764-10 et 764-20 étant interprétées conjointement par l'automate de tri et d'alarme 766.

Une variante de la figure 18, non représentée, consiste à ne prévoir qu'une seule phase « Décision & alarme », utilisant directement les sorties des trois traitements 761-1, 761-10 et 761-20.

Le contrôle non destructif proprement dit se fait "à la volée", c'est-à-dire au fur et à mesure que le tube défile dans l'installation de contrôle. La décision issue du traitement des informations décrit plus haut peut être prise elle aussi soit au fur et à mesure que le tube défile dans l'installation de contrôle (avec décision-alarme et marquage "à la volée") ;

une variante consiste à prendre cette décision après que toute la longueur du tube ait été inspectée, ou même encore plus tard (après le contrôle de l'ensemble d'un lot de tubes par exemple), chaque tube étant repéré/identifié (N° d'ordre par exemple). Dans ce cas, il est nécessaire que les informations obtenues soient enregistrées (mémorisées). Les enregistrements peuvent faire l'objet d'une analyse postérieure par un opérateur habilité à prendre une décision après avoir analysé les résultats enregistrés et traités par le(s) réseau(x) de neurones.

Bien entendu, compte-tenu des propriétés des circuits neuronaux, il est possible de regrouper au moins partiellement l'ensemble des circuits neuronaux (contenus dans les traitements 761-1, 761-10 et 761-20) en un seul circuit neuronal, ayant toutes les entrées voulues.

Le mode de réalisation décrit utilise directement des réseaux neuronaux. L'invention n'est pas limitée à ce genre de réalisation. Ici, l'expression "agencement du genre circuit neuronal" peut couvrir d'autres techniques de statistiques non linéaires, avec ou sans circuits neuronaux.

Le système ici proposé a été décrit dans le cas du contrôle non destructif lors de la fabrication de tubes sans soudure, cas auquel l'invention s'applique particulièrement bien. Les mêmes techniques peuvent s'appliquer notamment à des produits sidérurgiques longs non nécessairement tubulaires.

Dans le cas de tubes soudés ou autres produits soudés (comme par exemple des tôles ou des plaques), le système s'avère capable de déterminer en plus les limites du cordon de soudure, et par conséquent de localiser les éventuelles imperfections dans le cordon de soudure, qui peuvent être à surveiller. De leur côté, les imperfections situées en dehors des limites du cordon de soudure, qui peuvent correspondre à des inclusions déjà présentes dans le feuillard (ou produit) de base, sont à considérer différemment.

Annexe 1

Section 1

$$Y_i = F\left(\sum_j w_{ij} X_i\right) \qquad (11)$$

$$S_1 = F\left(\sum_{i=1}^{N} E_i w_i + w_0\right) \qquad (12)$$

$$S = \sum_{i=1}^{k} S_i w'_i + w'_0 \qquad (13)$$

$$D_p = S_p - R_p \qquad (14)$$

$$Cg = \frac{\sum_{p=1}^{p=M} D_p^2}{2 M} \qquad (15)$$

Section 2

$$pfa = \int_{seuil}^{\infty} \frac{1}{\sqrt{2\pi}\, std_b}\, e^{-\frac{x - m_b{}^2}{2\, std_b^2}}\, dx = Q\left(\frac{seuil - m_b}{std_b}\right) \qquad (21)$$

$$seuil = std_b\, Q^{-1}(pfa) + m_b \qquad\qquad (22)$$

## Revendications

1. Dispositif formant outil d'aide à l'exploitation, pour le contrôle non destructif, en cours ou en sortie de fabrication, de produits sidérurgiques, tels que des tubes ou autres produits longs, cet outil étant destiné à tirer des informations sur d'éventuelles imperfections du tube, à partir de signaux de retour que captent (73), consécutivement à l'excitation sélective (70) de capteurs ultrasonores émetteurs selon une loi de temps choisie, des capteurs ultrasonores récepteurs formant un agencement de géométrie choisie, monté en couplage ultrasonore avec le tube par l'intermédiaire d'un milieu liquide, avec mouvement relatif de rotation/translation entre le tube et l'agencement de transducteurs, ledit outil d'exploitation étant **caractérisé en ce qu'**il comprend :

   - un convertisseur (891 ; 892) capable d'isoler sélectivement une représentation numérique de possibles échos dans des fenêtres temporelles désignées, en fonction du mouvement relatif de rotation/translation, et d'en tirer une image (901 ; 902) d'imperfections possibles dans le tube,
   - un filtre (921 ; 922), capable de déterminer, dans les images (901 ; 902), des zones d'imperfection présumée (Zcur), ainsi que des propriétés de chaque imperfection présumée,
   - un combinateur (960), agencé pour préparer des entrées numériques de travail, à partir d'un extrait (951 ; 952) des images correspondant à une zone d'imperfection présumée (Zcur), de propriétés de l'imperfection présumée dans la même zone, issues du filtre (921 ; 922), et de données de contexte (740),
   - au moins un agencement du genre circuit neuronal (970), qui reçoit des entrées de travail issues du combinateur (960),
   - un étage numérique de décision et alarme (992) opérant sur la base de la sortie de l'agencement du genre circuit neuronal (970), et
   - un automate de tri et de marquage (994) agencé pour écarter et marquer des tubes décidés non conformes par l'étage numérique de décision et alarme (992).

2. Dispositif selon la revendication 1, destiné à travailler avec deux agencements de transducteurs ultrasonores de géométrie choisie (P11,P12;P21,P22), montés en couplage ultrasonore sensiblement selon une symétrie miroir de la direction de leurs faisceaux ultrasonores respectifs, **caractérisé en ce que** ledit outil d'exploitation comprend deux convertisseurs (891,892) respectivement consacrés à ces deux agencements de transducteurs (P11,P12; P21,P22), et **en ce que** le combinateur (960) est agencé pour opérer sélectivement sur les échos de peau interne ou sur les échos de peau externe ou sur les échos intervenant dans la masse du tube, mais en même temps sur les données relatives à l'un et l'autre des deux agencements transducteurs.

3. Dispositif selon l'une des revendications 1 et 2, **caractérisé en ce que** le convertisseur (891 ; 892) est agencé pour isoler sélectivement une représentation numérique de possibles maximas d'échos dans des fenêtres temporelles désignées correspondant à des échos de peau interne, à des échos de peau externe, ainsi que des échos provenant de la masse du tube, respectivement, et **en ce que** le combinateur (960) est agencé pour opérer sélectivement sur les échos de peau interne ou sur les échos de peau externe ou sur les échos intervenus dans la masse.

4. Dispositif selon l'une des revendications précédentes, **caractérisé en ce que** le combinateur (960) reçoit au moins une entrée (9511 ;9521) relative à un extremum d'amplitude de l'image dans la zone d'imperfection présumée.

5. Dispositif selon l'une des revendications précédentes, **caractérisé en ce que** le filtre (921 ; 922) est agencé pour produire, en tant que propriétés de chaque imperfection présumée, son obliquité et sa longueur, tandis que le combinateur (960) reçoit des entrées correspondantes d'obliquité d'imperfection (931) et de longueur d'imperfection (932).

6. Dispositif selon l'une des revendications précédentes, **caractérisé en ce que** le filtre (921 ; 922), le combinateur (960), le circuit neuronal (970) et l'étage numérique de décision et alarme (992) sont agencés pour opérer itérativement sur une suite de zones d'imperfection présumée (Zcur), déterminées par ledit filtre (921 ; 922).

7. Dispositif selon la revendication 6, **caractérisé en ce que** le filtre (921 ; 922), le combinateur (960), le circuit neuronal (970) et l'étage numérique de décision et alarme (992) sont agencés pour opérer alternativement sur la peau interne et la peau externe du tube.

8. Dispositif selon l'une des revendications précédentes, **caractérisé en ce que** ledit agencement du genre circuit neuronal comprend :

   - un premier circuit neuronal (NC121- NC123) propre à évaluer la nature d'une imperfection parmi une pluralité de classes prédéfinies, et
   - un second circuit neuronal (NC141- NC143) propre à évaluer la gravité d'une imperfection.

9. Dispositif selon la revendication 8, **caractérisé en ce que** les deux circuits neuronaux ont des entrées qui diffèrent par :

   - une entrée (9512 ; 9522) de nombre de maxima voisins pour le premier circuit neuronal, et
   - une entrée (9513 ; 9523) de largeur d'écho pour le second circuit neuronal.

10. Dispositif selon l'une des revendications 8 et 9, **caractérisé en ce que** les sorties des deux circuits neuronaux sont combinées pour affiner la prédiction.

11. Dispositif selon l'une des revendications précédentes, **caractérisé en ce que** l'émission et la réception des signaux ultrasonores sont réalisées à chaque fois par un même transducteur, pour une partie au moins de l'agencement de capteurs.

12. Dispositif de contrôle non destructif de tubes en cours ou en sortie de fabrication, **caractérisé en ce qu'**il comprend :

   - un agencement de transducteurs ultrasonores de géométrie choisie, monté en couplage ultrasonore avec le tube par l'intermédiaire d'un milieu liquide, avec mouvement relatif de rotation/translation entre le tube et l'agencement de transducteurs,
   - des circuits pour exciter sélectivement (70) ces éléments transducteurs selon une loi de temps choisie, et pour recueillir (73) les signaux de retour qu'ils captent, et
   - un outil d'aide à l'exploitation selon l'une des revendications précédentes.

13. Procédé de contrôle non destructif de produits sidérurgiques, tels que des tubes ou autres produits longs, en cours ou en sortie de fabrication, comprenant les étapes suivantes :

   a. prévoir un agencement de transducteurs ultrasonores de géométrie choisie, monté en couplage ultrasonore avec le tube par l'intermédiaire d'un milieu liquide, avec mouvement relatif de rotation/translation entre le tube et l'agencement de transducteurs,
   b. exciter sélectivement (70) ces éléments transducteurs selon une loi de temps choisie,
   c. recueillir (73) les signaux de retour qu'ils captent, afin d'analyser sélectivement ces signaux de retour (760-766), pour en tirer des informations sur d'éventuelles imperfections du tube,

   **caractérisé en ce qu'**il comprend en outre les étapes suivantes :

   d. isoler sélectivement une représentation numérique de possibles échos dans des fenêtres temporelles désignées, en fonction du mouvement relatif de rotation/translation (891 ; 892), et en tirer une image (901 ; 902) d'imperfections possibles dans le tube,
   e. filtrer (921 ; 922) les images (901 ; 902) selon des critères de filtrage choisis, afin d'y déterminer des zones d'imperfection présumée (Zcur), ainsi que des propriétés de chaque imperfection présumée,
   f. former (960) des entrées numériques de travail, à partir d'un extrait (951 ; 952) des images correspondant à une zone d'imperfection présumée (Zcur), de propriétés de l'imperfection présumée dans la même zone, issues du filtre (921 ; 922), et de données de contexte (740),
   g. appliquer les entrées ainsi formées (960) à au moins un agencement du genre circuit neuronal (970),
   h. traiter numériquement la sortie de l'agencement du genre circuit neuronal (970) selon des critères de décision choisis, pour en tirer une décision et/ou une alarme (992), et
   i. écarter et marquer (994) des tubes décidés non conformes par l'étape h.

14. Procédé selon la revendication 13, dans lequel :

à l'étape a., on prévoit deux agencements de transducteurs ultrasonores de géométrie choisie (P11,P12; P21,P22), montés en couplage ultrasonore sensiblement selon une symétrie miroir de la direction de leurs faisceaux ultrasonores respectifs,

**caractérisé en ce que** les étapes d. à i. sont menées conjointement sur les signaux issus de l'un et l'autre de ces deux agencements de transducteurs.

**15.** Procédé selon l'une des revendications 13 et 14, **caractérisé en ce que** :

- à l'étape d., lesdites fenêtres temporelles désignées comprennent certaines au moins des fenêtres du groupe correspondant à des échos de peau interne, à des échos de peau externe, ainsi que des échos provenant de la masse du tube.

**16.** Procédé selon l'une des revendications 13 à 15, **caractérisé en ce que** :

- à l'étape e., les critères de filtrage choisis comprennent au moins un critère d'existence d'imperfection, un critère d'obliquité d'imperfection et un critère de longueur d'imperfection.

**17.** Procédé selon l'une des revendications 13 à 16, **caractérisé en ce que** :

- les étapes f. et g. sont répétées itérativement pour chaque imperfection détectée à l'étape e.

**Claims**

**1.** Device forming an operating tool, for the non-destructive testing, during or at the end of production, of iron an steel products, on pipes or other elongated products, this tool being intended to extract information such as possible defects in the pipe, from feedback signals that are captured (73), following selective excitation (70) of ultrasound sensor transmitters according to a selected time rule, forming an arrangement with a selected geometry, mounted in ultrasound coupling with the pipe via the intermediary of a liquid medium, with relative rotation/translation movement between the pipe and the transducer arrangement, said operating tool being **characterised in that** it comprises

- a converter (891; 892), capable of selectively isolating a digital representation of possible echoes in designated time windows, as a function of the relative rotation/translation movement, and extracting from this an image (901; 902), of possible defects in the pipe;
- a filter (921; 922), capable of determining, in the images (901; 902), presumed defect zones (Zcur), as well as the properties of each presumed defect;
- a combiner (960), arranged to prepare digital inputs for the neural circuit, from an extract (951; 952) of the images corresponding to a presumed defect zone (Zcur), properties of the presumed defect in the same zone, coming from the filter (921; 922), and contextual data (740);
- at least one arrangement of the neural circuit type (970), that receives the inputs from the combiner (960);
- a digital decision and alarm stage (992), operating on the basis of the output from the arrangement of the neural circuit type (970), and
- a sorting and marking robot (994), arranged to separate and mark pipes that have been deemed not to conform by the decision and alarm digital stage (992).

**2.** Device according to claim 1, intended to work with two arrangements of ultrasound transducers with a selected geometry (P11, P12,; P21, P22), mounted in ultrasound coupling roughly according to a mirrored symmetry of the direction of their respective ultrasound beams, **characterised in that** said operating tool comprises two converters (891, 892) respectively dedicated to these two arrangements of transducers (P11, P12; P21, P22), and **in that** the combiner (960) is arranged to operate selectively on the inner skin echoes or on the outer skin echoes or the echoes taking place in the mass of the pipe, but at the same time on the data relating to one or other of the two transducer arrangements.

**3.** Device according to either of claims 1 and 2, **characterised in that** the converter (891; 892) is arranged in order to selectively isolate a digital representation of possible echo maxima in designated time windows corresponding to inner skin echoes, outer skin echoes, and echoes from the mass of the pipe, respectively, and **in that** the combiner (960) is arranged to operate selectively on the inner skin echoes or the outer skin echoes or the echoes occurring in the mass.

4. Device according to one of the above claims, **characterised in that** the combiner (960) receives at least one input (9511; 9512) relating to an amplitude extremum of the image in the presumed defect zone.

5. Device according to one of the above claims, **characterised in that** the filter (921; 922) is arranged in order to produce, as properties of each presumed defect, its obliquity and its length, while the combiner (960) receives corresponding inputs of the defect obliquity (931) and defect length (932).

6. Device according to one of the above claims, **characterised in that** the filter (921; 922), the combiner (960), the neural circuit (970) and the digital decision and alarm stage (992) are arranged to operate iteratively on a series of presumed defect zones (Zcur), determined by said filter (921; 922).

7. Device according to claim 6, **characterised in that** the filter (921; 922), the combiner (960), the neural circuit (970) and the digital decision and alarm stage (992) are arranged to operate alternately on the inner skin and outer skin of the pipe.

8. Device according to one of the above claims, **characterised in that** said arrangement of the neural circuit type comprises:

   - a first neural circuit (NC121 - NC123) suitable for evaluating the nature of a defect among a number of predefined classes, and
   - a second neural circuit (NC141 - NC143) suitable for evaluating the seriousness of a defect.

9. Device according to claim 8, **characterised in that** the two neural circuits have inputs that differ by:

   - an input (9512; 9522) of the number of maxima in the vicinity for the first neural circuit, and
   - an input (9513; 9523) of the echo width for the second neural circuit.

10. Device according to one of claims 8 and 9, **characterised in that** the outputs of the two neural circuits are combined to refine the prediction.

11. Device according to one of the above claims, **characterised in that** the transmission and reception of the ultrasound signals are performed each time by the same transducer, for at least part of the arrangement of sensors.

12. Non-destructive testing device for pipes during or at the end of production, **characterised in that** it comprises:

   - an arrangement of ultrasound transducers with a selected geometry, mounted in ultrasound coupling with the pipe via the intermediary of a liquid medium, with relative rotation/translation movement between the pipe and the transducer arrangement;
   - circuits to selectively excite (70) these transducer elements according to a selected time rule, and for gathering (73) the feedback signals they capture, and
   - an operational tool according to one of the above claims.

13. Non-destructive testing process for iron and steel products, such as pipes or other elongated products, during or at the end of production, consisting of the following steps:

   a. providing an arrangement of ultrasound transducers with a selected geometry, mounted in ultrasound coupling with the pipe via the intermediary of a liquid medium, with relative rotation/translation movement between the pipe and the arrangement of transducers;
   b. selectively exciting (70) these transducer elements according to a selected time rule;
   c. gathering (73) the feedback signals they capture, in order to selectively analyse these feedback signals (760-766), so as to extract information on any defects in the pipe;
   **characterised in that** it also comprises the following steps:
   d. selectively isolating a digital representation of possible echoes in designated time windows, as a function of the relative rotation/translation movement (891; 892), and extracting from this an image (901; 902) of possible defects in the pipe;
   e. filtering (921; 922) the images (901; 902) according to selected filter criteria, in order to determine presumed defect zones there (Zcur), and the properties of each presumed defect;
   f. forming (960) working digital inputs, from an extract (951; 952) of the images corresponding to a presumed defect zone (Zcur), properties of the presumed defect in the same zone, coming from the filter (921; 922), and contextual data (740);

g. applying the inputs so formed (960) to at least one arrangement of the neural circuit type (970);

h. digitally processing the output from the arrangement of the neural circuit type (970) according to selected decision criteria, in order to draw from this a decision and/or an alarm, (992) and

i. separating and marking (994) pipes considered not to conform by stage h.

**14.** Process according to claim 13, in which:

at step a, two arrangements of ultrasound transducers with a selected geometry (P11, P12;P21, P22) are provided for, mounted in ultrasound coupling roughly according to a mirrored symmetry of the direction of their respective ultrasound beams, **characterised in that** steps d to i are performed jointly on the signals coming from either of these two arrangements of transducers.

**15.** Process according to one of claims 13 and 14, **characterised in that**:

- at step d, said designated time windows comprise some at least of the windows of the group corresponding to the inner skin echoes, the outer skin echoes and the echoes from the mass of the pipe.

**16.** Process according to one of claims 13 to 15, **characterised in that**:

- at step e, the filtering criteria selected comprise at least a defect existence criterion, a defect obliquity criterion and a defect length criterion.

**17.** Process according to one of claims 13 to 16, **characterised in that**:

- steps f and g are repeated iteratively for each defect detected at step e.

**Patentansprüche**

**1.** Vorrichtung, welche ein Werkzeug zur Unterstützung bei der Auswertung von zerstörungsfreien Tests während oder nach Beendigung der Herstellung von Gussprodukten, wie Rohren oder anderen langen Produkten, bildet, wobei dieses Werkzeug dazu bestimmt ist, Informationen über eventuelle Unzulänglichkeiten des Rohrs zu sammeln ausgehend von Antwortsignalen, die nach einer selektiven Anregung (70) durch Ultraschall-Sender-Detektoren gemäß einer gewählten Zeit-Gesetzmäßigkeit von Ultraschall-Empfänger-Detektoren aufgenommen (73) werden, die in einer vorgegebenen Geometrie angeordnet und mit dem Rohr über ein flüssiges Medium ultraschallmäßig gekoppelt sind, wobei eine relative Dreh-/Translationsbewegung zwischen dem Rohr und der Anordnung von Wandlern erfolgt,

wobei das Auswertungswerkzeug **dadurch gekennzeichnet ist, dass** es aufweist:

- einen Wandler (891; 892), der fähig ist, selektiv eine numerische Darstellung von möglichen Echos in ausgewählten Zeitfenstern in Abhängigkeit von der Rotations-/Translations-Relativbewegung zu isolieren und daraus ein Bild (901; 902) möglicher Unzulänglichkeiten im Rotor abzuleiten,

- einen Filter (921; 922), der fähig ist, in den Bildern (901; 902) mutmaßliche Unzulänglichkeiten (Zcur) sowie Eigenschaften einer jeden mutmaßlichen Unzulänglichkeit zu bestimmen,

- einen Kombinierer (960), der ausgebildet ist zur Erstellung von numerischen Arbeitsdaten ausgehend von einem Auszug (951; 952) von von dem Filter (921; 922) ausgegebenen Bildern, die einem Bereich einer mutmaßlichen Unzulänglichkeit (Zcur), Eigenschaften der mutmaßlichen Unzulänglichkeit in demselben Bereich und Kontextdaten (740) entsprechen,

- mindestens eine Anordnung vom Typ neuronales Netz (970), die die von dem Kombinierer (960) abgegebenen Arbeitsdaten empfängt,

- eine numerische Entscheidungs- und Alarmstufe (992), die auf der Grundlage der Ausgangsdaten der Anordnung vom Typ neuronales Netz (970) arbeitet, und

- einen Auswahl- und Markierungsautomaten (994), der angeordnet ist, um von der Entscheidungs- und Alarmstufe (992) als nicht konform erachtete Rohre auszusondern und zu markieren.

**2.** Vorrichtung nach Anspruch 1 zum Arbeiten mit zwei Anordnungen von Ultraschallwandlern mit ausgewählter Geometrie (P11, P12; P21, P22), die ultraschallgekoppelt im Wesentlichen in einer Spiegelsymmetrie bezüglich der Richtung ihrer jeweiligen Ultraschallbündel angeordnet sind, **dadurch gekennzeichnet, dass** das Auswertungswerkzeug zwei Wandler (891, 892) aufweist, die jeweils diesen beiden Wandleranordnungen (P11, P12; P21, P22) zugeordnet sind, und dadurch, dass der Kombinierer (960) ausgebildet ist, um selektiv die Echos der Innenhaut oder die Echos der Außenhaut oder die Echos, die von der Masse der Rohres herrühren, zu bearbeiten sowie gleichzeitig die Daten bezüglich der einen und der anderen der beiden Wandleranordnungen.

3. Vorrichtung nach einem der Ansprüche 1 und 2, **dadurch gekennzeichnet, dass** der Wandler (891; 892) ausgebildet ist, um selektiv eine numerische Darstellung möglicher Echomaxima in ausgewählten Zeitfenstern zu isolieren, die jeweils den Echos der Innenhaut, den Echos der Außenhaut sowie den Echos aus der Masse des Rohres entsprechen, und dadurch, dass der Kombinierer (960) ausgebildet ist, um selektiv die Echos der Innenhaut oder die Echos der Außenhaut oder die Echos aus der Masse zu bearbeiten.

4. Vorrichtung nach einem der vorstehenden Ansprüche, **dadurch gekennzeichnet, dass** der Kombinierer (960) mindestens einen Eingangsdatensatz (9511; 9521) bezüglich eines Bildamplitudenextremums in dem Bereich einer mutmaßlichen Unzulänglichkeit empfängt.

5. Vorrichtung nach einem der vorstehenden Ansprüche, **dadurch gekennzeichnet, dass** der Filter (921; 922) ausgebildet ist, um als Eigenschaften jeder mutmaßlichen Unzulänglichkeit seine Schrägheit und seine Länge auszugeben, während der Kombinierer (960) entsprechende Eingangsdaten bezüglich der Schrägheit der Unzulänglichkeit (931) und der Länge der Unzulänglichkeit (932) empfängt.

6. Vorrichtung nach einem der vorstehenden Ansprüche, **dadurch gekennzeichnet, dass** der Filter (921; 922), der Kombinierer (960), das neuronale Netz (970) und die numerische Entscheidungs- und Alarmstufe (992) ausgebildet sind, um iterativ auf einer Folge von Bereichen mutmaßlicher Unzulänglichkeiten (Zcur), die durch den Filter (921, 922) ermittelt werden, zu arbeiten.

7. Vorrichtung nach Anspruch 6, **dadurch gekennzeichnet, dass** der Filter (921; 922), der Kombinierer (960), das neuronale Netz (970) und die Entscheidungs- und Alarmstufe (992) ausgebildet sind, um alternativ auf der Innenhaut und der Außenhaut des Rohres zu arbeiten.

8. Vorrichtung nach einem der vorstehenden Ansprüche, **dadurch gekennzeichnet, dass** die Anordnung vom Typ neuronales Netz aufweist:

   - ein erstes neuronales Netz (NC121-NC123) zum Ermitteln der Natur einer Unzulänglichkeit aus einer Mehrzahl vordefinierter Klassen, und
   - ein zweites neuronales Netz (NC141-NC143) zum Ermitteln des Ausmaßes einer Unzulänglichkeit.

9. Vorrichtung nach Anspruch 8, **dadurch gekennzeichnet, dass** die neuronalen Netze Eingänge aufweisen, die sich unterscheiden durch:

   - ein Eingangsdatenpaket (9512; 9522) bezüglich der Anzahl benachbarter Maxima für das erste neuronale Netz und
   - ein Eingangsdatenpaket (9513; 9523) bezüglich der Größe des Echos für das zweite neuronale Netz.

10. Vorrichtung nach einem der Ansprüche 8 und 9, **dadurch gekennzeichnet, dass** die Ausgangsdaten der beiden neuronalen Netze kombiniert werden, um die Vorhersage zu verfeinern.

11. Vorrichtung nach einem der vorstehenden Ansprüche, **dadurch gekennzeichnet, dass** mindestens für einen Teil der Anordnung der Detektoren die Emission und der Empfang von Ultraschallsignalen jedesmal durch ein und denselben Wandler erfolgen.

12. Vorrichtung zum zerstörungsfreien Testen von Rohren während oder am Ende ihrer Herstellung, **gekennzeichnet durch**:

   - eine Anordnung von Ultraschallwandlern mit ausgewählter Geometrie, die ultraschallmäßig mit dem Rohr über eine Flüssigkeit gekoppelt sind mit einer Rotations-/Translationsbewegung des Rohrs und der Wandleranordnung relativ zueinander,

- Schaltungen zur selektiven (70) Anregung der Wandlerelemente gemäß einer gewählten zeitlichen Gesetzmäßigkeit und um Antwortsignale, die die Wandler empfangen, zu sammeln (73), und
- ein Werkzeug zur Unterstützung der Auswertung nach einem der vorstehenden Ansprüche.

**13.** Verfahren zum zerstörungsfreien Testen von Gussprodukten, wie Rohren oder anderen langen Produkten, während oder am Ende der Herstellung, mit folgenden Schritten:

a. Vorsehen einer Ultraschallwandleranordnung mit gewählter Geometrie, die ultraschallmäßig mit dem Rohr über eine Flüssigkeit gekoppelt ist, mit einer Rotations-/Translationsbewegung zwischen dem Rohr und der Wandleranordnung relativ zueinander,

b. selektives Erregen (70) der Wandlerelemente gemäß einer gewählten zeitlichen Gesetzmäßigkeit,

c. Sammeln (73) der Antwortsignale, die die Wandler erfassen, um selektiv diese Antwortsignale (760-766) zu analysieren, um Informationen über eventuelle Unzulänglichkeiten des Rohres zu erfassen,

**dadurch gekennzeichnet, dass** das Verfahren ferner folgende Schritte aufweist:

d. selektives Isolieren einer numerischen Darstellung möglicher Echos in ausgewählten Zeitfenstern in Abhängigkeit von der Rotations-/Translations-Relativbewegung (891; 892) und Daraus-Ableiten eines Bildes (901; 902) möglicher Unzulänglichkeiten in dem Rohr,

e. Filtern (921; 922) der Bilder (901; 902) nach gewählten Filterkriterien, um daraus mutmaßliche Unzulänglichkeitsbereiche zu bestimmen sowie Eigenschaften einer jeden mutmaßlichen Unzulänglichkeit,

f. Erstellen (960) von numerischen Eingangsarbeitsdaten ausgehend von einem Auszug (951; 952) entsprechender Bilder eines Bereichs mutmaßlicher Unzulänglichkeit (Zcur), ferner ausgehend von Eigenschaften der mutmaßlichen Unzulänglichkeit in demselben Bereich, die von dem Filter (921; 922) ausgegeben werden, und ausgehend von Kontextdaten (740),

g. Eingeben der so gebildeten Eingangsdaten (960) in mindestens eine Anordnung vom Typ neuronales Netz (970),

h. numerische Behandlung der Ausgangsdaten der Anordnung vom Typ neuronales Netz (970) nach gewählten Entscheidungskriterien, um eine Entscheidung und/oder einen Alarm (992) abzuleiten, und

i. Aussortieren und Markieren (994) von Rohren, die in Schritt h. als nicht konform klassifiziert wurden.

**14.** Verfahren nach Anspruch 13, bei dem:

in Schritt a. zwei Ultraschallwandleranordnungen mit gewählter Geometrie (P11, P12; P21, P22) vorgesehen werden, die ultraschallgekoppelt im Wesentlichen in einer Spiegelsymmetrie bezüglich der Richtung ihrer jeweiligen Ultraschallbündel ultraschallgekoppelt montiert sind, **dadurch gekennzeichnet, dass** die Schritte d. bis i. zusammen mit den Signalen ausgeführt werden, die von der einen und der anderen der beiden Wandleranordnungen abgegeben werden.

**15.** Verfahren nach einem der Ansprüche 13 und 14, **dadurch gekennzeichnet, dass** in Schritt d. die ausgewählten Zeitfenster mindestens bestimmte Fenster der Gruppe enthalten, die den Echos der Innenhaut, den Echos der Außenhaut sowie den Echos aus der Masse des Rohres entsprechen.

**16.** Verfahren nach einem der Ansprüche 13 bis 15, **dadurch gekennzeichnet, dass**:

im Schritt e. die gewählten Filterkriterien mindestens ein Kriterium der Existenz einer Unzulänglichkeit, ein Kriterium der Schrägheit der Unzulänglichkeit und ein Kriterium der Länge der Unzulänglichkeit aufweisen.

**17.** Verfahren nach einem der Ansprüche 13 bis 16, **dadurch gekennzeichnet, dass**:

die Schritte f. und g. iterativ für jede in Schritt e. erfasste Unzulänglichkeit wiederholt werden

FIG.1

FIG.2

FIG.3A          FIG.3B          FIG.3C

FIG.4

FIG.5A

FIG.5B

FIG.6

1~µs
100 ~31,7µs
16 ~35µs
40

interface plexi/eau 7µs

interface eau/acier 70,4µs — Ext 1

133,8µs

1er écho de fond 72,4µs — Int 1

2ème écho de fond 74,4µs

135,8µs

135,8µs

14µs

137,8µs

3ème écho de fond 76,4µs

77,4µs

77,4µs

FIG.6A

FIG.6B

FIG.7

EP 2 035 822 B1

FIG.8

FIG.8A

FIG.9

TYPE 1
Angle 0°

**FIG. 10 A**

TYPE 2
Angle 0°

**FIG. 10 B**

TYPE 3
Angle 20 à 80°

**FIG. 10 C**

TYPE 4
Angle 20 à 80°

**FIG. 10 D**

EP 2 035 822 B1

FIG.11

EP 2 035 822 B1

Début d'image  — 801

Filtre -> 1ère zone Z0 à traiter
Zcur = Z0  — 803

Zone en cours Zcur  — 805

Extraction des données de la zone Zcur
dans images 1 et 2  — 807

Extraction des données pour la zone Zcur
dans la préparation des images 1 et 2  — 809

Traitement neuronal avec les données extraites
pour la zone Zcur  — 811

Mémorisation sélective
des résultats pour la zone Zcur  — 813

Autre zone Zi à traiter
dans l'image ?  — 820        — 821  Zcur = Zi

Fin pour cette image  — 822

FIG.12

FIG.13

FIG.14

FIG.15

I.L.              H.L.               O.L.

Cste

Connections

E1   $W_1$   $W_0$

N1   $W_1'$   $W_0'$

E2            S1

N2

E3

FIG.16

E(0)

E(1)     F  $\Sigma$  $w'(1)$  S(1)

E(N)

FIG.17

EP 2 035 822 B1

```
┌──────────┐         ┌─────────────────┐         ┌──────────────┐
│    P1    │────────▶│    Proc (P1)    │────────▶│  Décision &  │
└──────────┘         └─────────────────┘         │    alarme    │
                          761-1                   └──────────────┘
                                                      764-1
```

```
┌──────────┐
│   P11    │──┐
└──────────┘  │      ┌─────────────────┐         ┌──────────────┐
              ├─────▶│ Proc(P11,P12)   │────────▶│  Décision &  │
┌──────────┐  │      └─────────────────┘         │    alarme    │
│   P12    │──┘           761-10                  └──────────────┘
└──────────┘                                          764-10
```

```
┌──────────┐
│   P21    │──┐
└──────────┘  │      ┌─────────────────┐         ┌──────────────┐
              ├─────▶│ Proc(P21,P22)   │────────▶│  Décision &  │
┌──────────┐  │      └─────────────────┘         │    alarme    │
│   P22    │──┘           761-20                  └──────────────┘
└──────────┘                                          764-20
```

```
                    ┌──────────────┐
                    │     Tri      │
                    │      &       │
                    │   Marquage   │
                    └──────────────┘
                         766
```

FIG.18

## RÉFÉRENCES CITÉES DANS LA DESCRIPTION

**Documents brevets cités dans la description**

- DE 4201502 C2
- JP 11002626 A
- JP 8110323 A
- JP 2003279550 A

**Littérature non-brevet citée dans la description**

- **LAWSON ET PARKER.** Automatic Detection of Defect in Industrial ultrasound images using a neural Network. *Proc. of Int. Symposium on Lasers, Optics, and Vision for Productivity in Manufacturing I (Vision Systems: Applications), June 1996, Proc. of SPIE,* 1996, vol. 2786, 37-47
- **DUNLOP ; MCNAB.** Shape Classification of Flaw Indications in 3-Dimensional ultrasonic Images. *IEE Proceedings - Science, Measurement and Technology,* Juillet 1995, vol. 142 (4), 307-312
- **RAVANBOD.** Application of neuro-fuzzy techniques in oil pipelines ultrasonic nondestructive testing. *NDT&E International,* 2005, vol. 38, 643-653